(19) **Europäisches Patentamt / European Patent Office / Office européen des brevets**

(11) **EP 3 593 201 B1**

(12) **EUROPÄISCHE PATENTSCHRIFT**

(45) Veröffentlichungstag und Bekanntmachung des Hinweises auf die Patenterteilung:
**21.12.2022 Patentblatt 2022/51**

(21) Anmeldenummer: **18708968.5**

(22) Anmeldetag: **01.03.2018**

(51) Internationale Patentklassifikation (IPC):
**G02B 27/64** *(2006.01)* **H04N 5/232** *(2006.01)*
**G02B 13/00** *(2006.01)*

(52) Gemeinsame Patentklassifikation (CPC):
**G02B 27/646; G02B 13/001; H04N 5/2258; H04N 5/2328**

(86) Internationale Anmeldenummer:
**PCT/EP2018/054997**

(87) Internationale Veröffentlichungsnummer:
**WO 2018/162304 (13.09.2018 Gazette 2018/37)**

(54) **MULTIAPERTURABBILDUNGSVORRICHTUNG, ABBILDUNGSSYSTEM UND VERFAHREN ZUM BEREITSTELLEN EINER MULTIAPERTURABBILDUNGSVORRICHTUNG**

MULTI-APERTURE IMAGING DEVICE, IMAGING SYSTEM AND METHOD FOR MAKING AVAILABLE A MULTI-APERTURE IMAGING DEVICE

DISPOSITIF DE REPRODUCTION MULTIOUVERTURE, SYSTÈME DE REPRODUCTION ET PROCÉDÉ DE FOURNITURE D'UN DISPOSITIF DE REPRODUCTION MULTI-OUVERTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2017 DE 102017204035**

(43) Veröffentlichungstag der Anmeldung:
**15.01.2020 Patentblatt 2020/03**

(73) Patentinhaber: **Fraunhofer-Gesellschaft zur Förderung der angewandten Forschung e.V.**
**80686 München (DE)**

(72) Erfinder:
• **WIPPERMANN, Frank**
**98617 Meiningen (DE)**
• **DUPARRÉ, Jacques**
**07745 Jena (DE)**

(74) Vertreter: **König, Andreas Rudolf et al**
**Schoppe, Zimmermann, Stöckeler Zinkler, Schenk & Partner mbB Patentanwälte**
**Radlkoferstraße 2**
**81373 München (DE)**

(56) Entgegenhaltungen:
DE-A1-102015 215 840  US-A1- 2010 328 471
US-A1- 2016 360 111  US-B1- 9 232 138

**Beschreibung**

Die vorliegende Erfindung bezieht sich auf eine Multiaperturabbildungsvorrichtung, auf ein Abbildungssystem und auf ein Verfahren zum Bereitstellen einer Multiaperturabbildungsvorrichtung. Die vorliegende Erfindung bezieht sich ferner auf Multiaperturabbildungssysteme mit linearer Kanalanordnung und kleiner oder kleinster Baugröße.

Konventionelle Kameras besitzen einen Abbildungskanal, der das gesamte Objektfeld abbildet. Die Kameras besitzen adaptive Komponenten, die eine relative laterale, zweidimensionale Verschiebung zwischen Objektiv und Bildsensor zur Realisierung einer optischen Bildstabilisierungsfunktion ermöglichen. Multiaperturabbildungssysteme mit linearer Kanalanordnung bestehen aus mehreren Abbildungskanälen, die jeweils nur einen Teil des Objekts aufnehmen und einen Umlenkspiegel enthalten.

In DE 10 2015 215840 A1 ist eine Multiaperturabbildungsvorrichtung beschrieben, die einen Bildsensor und ein Array von optischen Kanälen umfasst, wobei jeder optische Kanal eine Optik zur Abbildung eines Teilgesichtsfeldes eines Gesamtgesichtsfeldes auf einen Bildsensorbereich des Bildsensors umfasst.

US 2016/360111 A1 bezieht sich auf Techniken, mit denen die Fähigkeit eines digitalen Bilderfassungsgeräts zur Stabilisierung eines Videostreams verbessert werden soll.

US 9,232,138 B1 bezieht sich auf Ansätze, die es einem Computergerät wie einem Telefon oder Tablet-Computer ermöglichen, die elektronische Bildstabilisierung (EIS) und die optische Bildstabilisierung (OIS) in ihren jeweiligen Wirkungsbereichen anzuwenden.

US 2010/328471 A1 bezieht sich auf ein Mehrkanal-Kamerasystem zur Aufnahme von Standbildern oder Videobildern umfasst mehrere Objektive mit fester Brennweite und mehrere digitale Sensoren in einem kompakten Gehäuse.

Wünschenswert wären Konzepte zum mehrkanaligen Erfassen von Objektbereichen oder Gesichtsfeldern, die eine kompakte Realisierung ermöglichen.

Die Aufgabe der vorliegenden Erfindung besteht deshalb darin, eine Multiaperturabbildungsvorrichtung und ein Verfahren zum Bereitstellen einer Multiaperturabbildungsvorrichtung zu schaffen, das eine kompakte, d.h. einen geringen Bauraum aufweisende Realisierung mit einer hohen Bildqualität ermöglicht.

Diese Aufgabe wird durch den Gegenstand der unabhängigen Patentansprüche gelöst.

Eine Erkenntnis der vorliegenden Erfindung besteht darin, erkannt zu haben, dass obige Aufgabe dadurch gelöst werden kann, dass eine optische Bildstabilisierung eines von der Multiaperturabbildungsvorrichtung erfassten Bildes durch eine Relativbewegung zwischen dem Bildsensor, einem Array von optischen Kanälen und einer Strahlumlenkeinrichtung erhalten werden kann, so dass bereits existierende Komponenten nutzbar sind, was einen kompakten Aufbau ermöglicht und eine hohe Bildqualität bereitstellt. Eventuelle Abweichungen zwischen optischen Kanälen werden zusätzlich durch einen elektronischen Bildstabilisator ausgeglichen, so dass die kanalglobale optische Bildstabilisierung durch eine zwischen optischen Kanälen unterschiedliche elektronische Korrektur verbessert wird.

Gemäß einem Ausführungsbeispiel umfasst eine Multiaperturabbildungsvorrichtung einen einem Bildsensor, ein Array von optischen Kanälen, eine Strahlumlenkeinrichtung und einen optischen Bildstabilisator. Jeder optische Kanal des Arrays von optischen Kanälen umfasst eine Optik zur Abbildung eines Teilgesichtsfeldes eines Gesamtgesichtsfeldes auf einen Bildsensorbereich des Bildsensors. Die Strahlumlenkeinrichtung ist ausgebildet, um einen Strahlengang der optischen Kanäle umzulenken. Der optische Bildstabilisator ist konfiguriert, um eine Bildstabilisierung entlang einer ersten Bildachse durch Erzeugen einer ersten Relativbewegung zwischen dem Bildsensor, dem Array und der Strahlumlenkeinrichtung und eine Bildstabilisierung entlang einer zweiten Bildachse durch Erzeugen einer zweiten Relativbewegung zwischen dem Bildsensor, dem Array und der Strahlumlenkeinrichtung bereitzustellen. Die Multiaperturabbildungsvorrichtung umfasst einen elektronischen Bildstabilisator zur Bildstabilisierung eines ersten optischen Kanals des Arrays entlang der ersten und der zweiten Bildachse. Gemäß einer ersten Implementierung der Erfindung ist der optische Bildstabilisator ausgebildet, um die optische Bildstabilisierung so auszuführen, dass die optische Bildstabilisierung für ein Abbild eines ersten der Teilgesichtsfelder als Referenzabbild möglichst exakt ist, wobei der elektronische Bildstabilisator ausgebildet ist, um ein Abbild eines zweiten Teilgesichtsfeldes ausgehend von dem Referenzabbild des optischen Bildstabilisators auszuführen. Gemäß einer zweiten Implementierung der Erfindung ist der optische Bildstabilisator ausgebildet, um ein Abbild des abgebildeten Teilgesichtsfeldes eines Referenzkanals der optischen Kanäle zu stabilisieren, und bei der der elektronische Bildstabilisator ausgebildet ist, um eine Bildstabilisierung kanalindividuell und von einander verschieden für von dem Referenzkanal verschiedene optische Kanäle auszuführen, wobei die Multiaperturabbildungsvorrichtung ausgebildet ist, um den Referenzkanal ausschließlich optisch zu stabilisieren.

Weitere Ausführungsbeispiele beziehen sich auf ein Abbildungssystem und auf Verfahren zum Bereitstellen einer Multiaperturabbildungsvorrichtung.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1a      eine schematische Ansicht einer Multiaperturabbildungsvorrichtung gemäß einem Ausführungsbeispiel;

Fig. 1b      eine schematische Ansicht einer Multia-
             perturabbildungsvorrichtung gemäß ei-
             nem Ausführungsbeispielbei der ein Aktor
             mit einem Bildsensor verbunden ist;

Fig. 2a      eine schematische Seitenschnittansicht
             einer weiteren Multiaperturabbildungsvor-
             richtung gemäß einem Ausführungsbei-
             spiel;

Fig. 2b      zeigt eine schematische Seitenschnittan-
             sicht der Muitiaperturabbiidungsvorrich-
             tung aus Fig. 2a;

Fig. 3       eine schematische Aufsicht auf eine Mul-
             tiaperturabbildungsvorrichtung bei der ei-
             ne Strahlumlenkeinrichtung verschiedene
             Strahlumlenkelemente umfasst, gemäß
             einem Ausführungsbeispiel;

Fig. 4a      eine schematische perspektivische An-
             sicht einer Multiaperturabbildungsvorrich-
             tung mit einzeilig angeordneten optischen
             Kanälen, gemäß einem Ausführungsbeispiel;

Fig. 4b      eine schematische Darstellung eines Ge-
             samtgesichtsfelds gemäß einem Ausfüh-
             rungsbeispiel, wie es beispielsweise mit ei-
             ner hierin beschriebenen Multiaperturab-
             bildungsvorrichtung erfassbar ist;

Fig. 4c      eine schematische perspektivische Dar-
             stellung der Multiaperturabbildungsvor-
             richtung aus Fig. 4a, anhand derer eine
             vorteilhafte Ausgestaltung einer Kombination der optischen Bildstabilisierung und
             der elektronischen Bildstabilisierung erläutert wird;

Fig. 5a      eine schematische Darstellung einer
             Strahlumlenkeinrichtung, die gemäß einem Ausführungsbeispiel als Array von
             Facetten gebildet ist;

Fig. 5b      eine schematische Ansicht der Strahlum-
             lenkeinrichtung gemäß einem Ausfüh-
             rungsbeispiel, bei der Facetten verglichen
             mit der Darstellung in Fig. 5a eine voneinander verschieden Sortierung aufweisen;

Fig. 6a-f    vorteilhafte Ausgestaltungen einer Strah-
             lumlenkeinrichtung gemäß Ausführungs-
             beispielen;

Fig. 7       eine schematische perspektivische Darstellung eines Abbildungssystems gemäß
             einem Ausführungsbeispiel;

Fig. 8       eine schematische perspektivische Ansicht einer tragbaren Vorrichtung, die zwei
             Multiaperturabbildungsvorrichtungen umfasst, gemäß einem Ausführungsbeispiel;

Fig. 9       einen schematischen Aufbau umfassend
             eine erste Multiaperturabbildungsvorrich-
             tung und eine zweite Multiaperturabbil-
             dungsvorrichtung mit einem gemeinsa-
             men Bildsensor, einem gemeinsamen Ar-
             ray und einer gemeinsamen Strahlumlen-
             keinheit;

Fig. 10a-e   schematische Darstellungen einer Ausge-
             staltung des elektronischen Bildstabilisa-
             tors gemäß einem Ausführungsbeispiel;
             und

Fig. 11      eine schematische Darstellung eines Ver-
             fahrens gemäß einem Ausführungsbei-
             spiel zur Bereitstellung einer Multiaper-
             turabbildungsvorrichtung.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

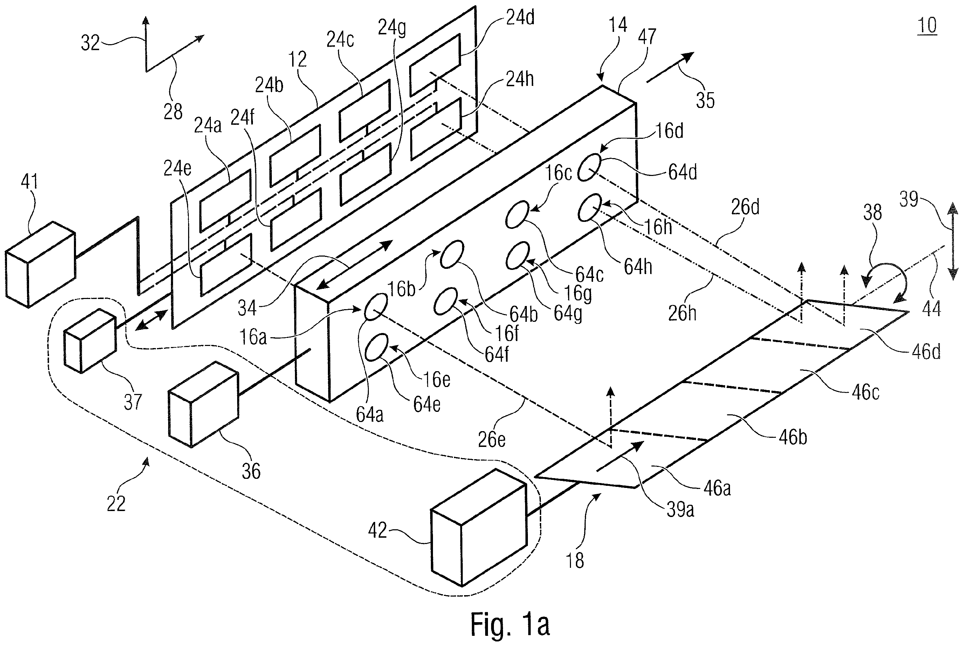

Fig. 1a zeigt eine schematische Ansicht einer Multiaperturabbildungsvorrichtung 10 gemäß einem Ausführungsbeispiel. Die Multiaperturabbildungsvorrichtung 10 umfasst einen Bildsensor 12, ein Array 14 von optischen Kanälen 16a-h, eine Strahlumlenkeinrichtung 18 und einen optischen Bildstabilisator 22. Jeder optische Kanal 16a-h umfasst eine Optik 64a-h zur Abbildung eines Teilgesichtsfeldes eines Gesamtgesichtsfeldes auf einen Bildsensorbereich 24a-h des Bildsensors 12. Optische Kanäle können als ein Verlauf von Strahlengängen verstanden werden. Die Strahlengänge können durch die in dem Array 14 angeordnete Optik 64a-h beeinflusst sein, etwa durch Streuung oder Bündelung. Die einzelnen optischen Kanäle können jeweils eine vollständige Abbildungsoptik bilden und mindestens einer optischer Komponente bzw. Optik, etwa eine refraktive, diffraktive oder hybride Linse aufweisen und können einen Ausschnitt des mit der Multiaperturabbildungsvorrichtung insgesamt aufgezeichneten Gesamtobjekts abbilden. Das bedeutet, dass eine, mehrere oder alle der Optiken 64a-h auch Kombinationen von optischen Elementen sein können. Bezüglich eines, mehreren oder allen der optischen Kanäle kann eine Aperturblende angeordnet sein.

Die Bildsensorbereiche 24a-h können beispielsweise jeweils aus einem Chip gebildet sein, der ein entsprechendes Pixelarray umfasst, wobei die Bildsensorbereiche auf einem gemeinsamen Substrat bzw. einem gemeinsamen Schaltungsträger wie einer gemeinsamen Platine oder einem gemeinsamen Flexboard montiert sein können. Alternativ wäre es natürlich auch möglich, dass die Bildsensorbereiche 24a-h jeweils aus einem Teil eines gemeinsamen Pixelarrays, das sich kontinuierlich über die Bildsensorbereiche 24a-h erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 24a-h ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen oder Schaltungsträgern montiert sein, wie z.B. alle gemeinsam oder gruppenweise oder dergleichen. Es ist weiterhin eine Lösung möglich, bei der ein einzelner Chip genutzt wird, der über viele individuelle Pixelfelder verfügt. Alternative Ausführungsbeispiele weisen mehrerer Chips auf, die wiederum über individuelle Pixelfelder verfügen.

Die Strahlumlenkeinrichtung 18 ist ausgebildet, um einen Strahlengang 26 der optischen Kanäle 16a-h umzulenken. Der Bildstabilisator 22 ist ausgebildet, um basierend auf einer Relativbewegung zwischen dem Bildsensor 12, dem Array 14 und der Umlenkeinrichtung 18 eine optische Bildstabilisierung entlang einer ersten Bildachse 28 und entlang einer zweiten Bildachse 32 zu ermöglichen. Die erste Bildachse 28 und die zweite Bildachse 32 können von einer Anordnung oder Orientierung der Bildsensorbereiche 24a-h bzw. des Bildsensors 12 beeinflusst sein. Gemäß einem Ausführungsbeispiel sind die Bildachsen 28 und 32 senkrecht zueinander angeordnet und/oder mit Erstreckungsrichtungen von Pixeln der Bildsensorbereiche 24a-d übereinstimmen. Die Bildachsen 28 und 32 können alternativ oder zusätzlich eine Orientierung angeben, entlang der ein Teilgesichtsfeld oder das Gesamtgesichtsfeld abgetastet oder erfasst werden. Vereinfacht ausgedrückt kann es sich bei den Bildachsen 28 und 32 um eine erste bzw. zweite Richtung in einem von der Multiaperturabbildungsvorrichtung 10 erfassten Bild handeln. Die Bildachsen 28 und 32 weisen bspw. einen Winkel von ≠ 0° zueinander auf, beispielsweise senkrecht zueinander im Raum angeordnet sein.

Eine optische Bildstabilisierung kann vorteilhaft sein, wenn während eines Erfassungsvorgangs, während dem Teilgesichtsfelder oder das Gesamtgesichtsfeld erfasst werden, die Multiaperturabbildungsvorrichtung 10 gegenüber dem Objektbereich, dessen Gesichtsfeld erfasst wird, bewegt wird. Der optische Bildstabilisator 22 kann ausgebildet sein, um die.. ser Bewegung zumindest teilweise entgegenzuwirken, um ein Verwackeln des Bildes zu reduzieren oder zu verhindern. Für die optische Bildstabilisierung entlang der Bildachse 28 kann der optische Bildstabilisator 22 ausgebildet sein, um eine erste Relativbewegung 34 zwischen dem Bildsensor 12, dem Array 14 und der Strahlumlenkeinrichtung 18 zu erzeugen. Für die optische Bildstabilisierung entlang der Bildachse 32 ist der optische Bildstabilisator 22 ausgebildet, um eine zweite Relativbewegung zwischen dem Bildsensor 12, dem Array 14 und der Strahlumlenkeinrichtung 18 zu erzeugen. Für die erste Relativbewegung 34 kann der optische Bildstabilisator 22 einen Aktor 36 und/oder einen Aktor 37 zum Erzeugen der Relativbewegung 34 durch Verschieben des Arrays 14 bzw. des Bildsensors 12 entlang der Bildachse 28 umfassen. Anders ausgedrückt, obwohl der Aktor 36 so dargestellt ist, dass er das Array 14 translatorisch verschiebt oder bewegt, kann der Aktor 36 gemäß weiteren Ausführungsbeispielen alternativ oder zusätzlich mit dem Bildsensor 12 verbunden sein und ausgebildet sein, um den Bildsensor 12 relativ zu dem Array 14 zu bewegen. Alternativ oder zusätzlich kann der optische Bildstabilisator einen Aktor 42 umfassen, der ausgebildet ist, um eine translatorische Bewegung 39a der Strahlumlenkeinrichtung 18 entlang der Bildachse 28 zu erzeugen. Der optische Bildstabilisator 22 ist dabei so konfiguriert, dass er die Bewegungen der Aktoren 36, 37 und/oder 42 ausführt, dass zwischen dem Bildsensor 12, dem Array 14 und der Strahlumlenkeinrichtung 18 die Relativbewegung 34 entsteht. Das bedeutet, obwohl die Relativbewegung 34 in Fig. 1a an dem Array 14 dargestellt ist, können alternativ oder zusätzlich auch andere Komponenten bewegt werden. Die Relativbewegung 34 kann parallel zu einer Zeilenerstreckungsrichtung 35 und senkrecht zu den Strahlengängen 26 ausführbar sein. Es kann jedoch vorteilhaft sein, das Array 14 gegenüber dem Bildsensor 12 translatorisch in Bewegung zu versetzen, um beispielsweise eine elektrische Verschaltung des Bildsensors 12 gegenüber weiteren Komponenten mechanisch wenig oder nicht zu belasten.

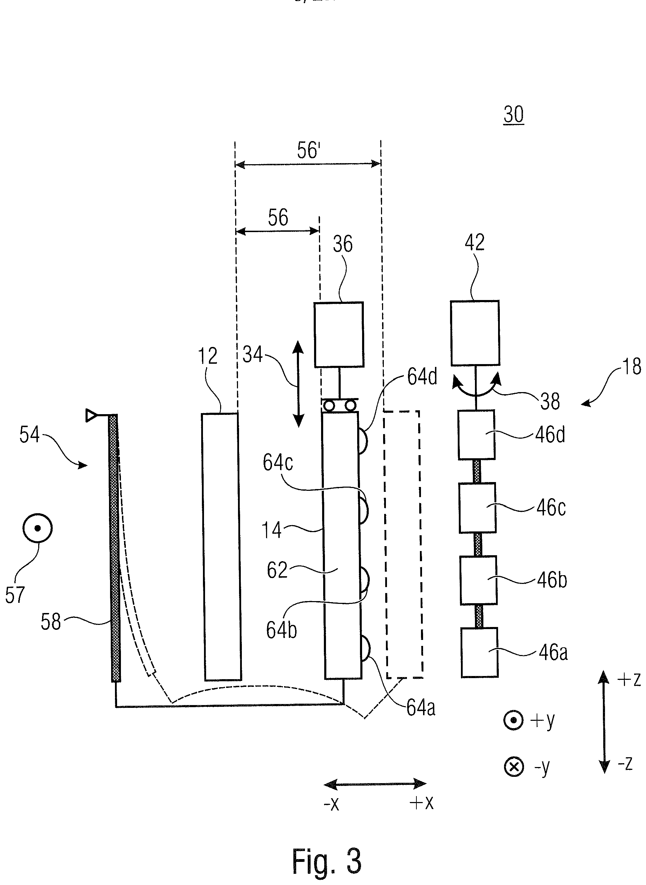

Zum Erzeugen der zweiten Relativbewegung kann der optische Bildstabilisator 22 ausgebildet sein, um eine Rotationsbewegung 38 der Strahlumlenkeinrichtung 18 zu erzeugen oder zu ermöglichen und/oder um eine translatorische Relativbewegung zwischen dem Bildsensor 12 und dem Array 14 entlang der Bildachse 32 und/oder eine translatorischen Relativbewegung zwischen dem Array 14 und der Strahlumlenkeinrichtung 18 bereitzustellen, wobei hierfür die Aktoren 36, 37 und/oder 42 angeordnet sein können. Für die Erzeugung der Rotationsbewegung 38 kann der optische Bildstabilisator 22 beispielsweise den Aktor 42 umfassen, der ausgebildet ist, um die Rotationsbewegung 38 zu erzeugen Alternativ kann der optische Bildstabilisator 22 ausgebildet sein, um unter Verwendung des Aktors 42 eine translatorische Bewegung 39b entlang der Bildachse 32 zu erzeugen. Basierend auf der ersten Relativbewegung 34 und/oder 39a kann eine optische Bildstabilisierung entlang einer Bildrichtung parallel hierzu, beispielsweise entlang oder entgegengesetzt zu der Bildachse 28 erhalten werden. Basierend auf der zweiten Relativbewegung 38 und/oder 39b kann eine optische Bildstabilisierung entlang einer Bildrichtung erhalten werden, die senkrecht zu einer Rotationsachse 44 der Rotationsbewegung 38 in einer Hauptseitenebene des Bildsensors 12 angeordnet ist, etwa entlang der Bildachse 32. Eine Hauptseite kann als Seite verstanden werden, die eine große oder größte Abmessung verglichen mit anderen Seiten aufweist. Alternativ oder zusätzlich kann eine Fokussiereinrichtung, wie sie bspw. in Zusammenhang mit Fig. 3 beschrieben ist, angeordnet sein, die ausgebildet ist, um einen Fokus der Multiaperturabbildungsvorrichtung zu ändern. Obwohl für den Erhalt der optischen Bildstabilisierung eine Ausgestaltung des optischen Bildstabilisators 22 derart, dass er die erste und die zweite Relativbewegung als translatorische Relativbewegungen steuert, möglich ist, kann eine Ausgestaltung der zweiten Relativbewegung als Rotationsbewegung 38 vorteilhaft sein, da in diesem Fall eine translatorische Bewegung von Komponenten entlang der zweiten Bildachse 32 vermieden werden kann. Diese Richtung kann parallel zu einer Dickenrichtung der Multiaperturabbildungsvorrichtung 10 liegen, die gemäß manchen Ausführungen möglichst gering gehalten werden soll. Durch die Rotationsbewegung kann ein derartiges Ziel erreicht werden.

Vereinfacht ausgedrückt kann anstelle einer translatorischen Bewegung senkrecht zu der Relativbewegung 34 die Rotationsbewegung 38 genutzt werden, um die optische Bildstabilisierung entlang der zweiten Bildachse 32 zu erhalten. Dies ermöglicht, dass ein Bauraumbedarf zum Ermöglichen der translatorischen Relativbewegung senkrecht zu der Relativbewegung 34 eingespart werden kann. Beispielsweise kann die translatorische Relativbewegung senkrecht zu einer Dickenrichtung der Vorrichtung angeordnet sein, so dass die Vorrichtung mit einer geringen Dicke, d.h. dünn ausgeführt werden kann. Dies bietet insbesondere im Bereich mobiler Vorrichtungen Vorteile, da diese mit einem flachen Gehäuse ausgeführt werden können.

Die Multiaperturabbildungsvorrichtung 10 weist einen elektronischen Bildstabilisator 41 auf, der ausgebildet ist, um die Teilbilder, die auf die Bildsensorbereiche 24a-h abgebildet werden, elektronisch zu stabilisieren, das bedeutet durch Manipulation der Bilddaten.

Hierfür können unterschiedliche Methoden einzeln oder in Kombination angewendet werden, etwa elektronische Vibrationsreduzierung (electronic Vibration Reduction; e-VR), Coolpix S4, Anti-Schüttel DSP (Anti-Shake-DSP) und/oder Fortgeschrittene Schüttelreduzierung (Advanced Shake Reduction - ASR). Der elektronische Bildstabilisator 41 ist ausgebildet, um ein erstes Teilbild der Bildsensorbereiche 24a-h eines ersten optischen Kanals 16a-h des Arrays 14 in einem ersten Umfang zu stabilisieren. Ferner kann der elektronische Bildstabilisator 41 ausgebildet sein, um zusätzlich ein zweites Teilbild der Bildsensorbereiche 24a-h eines zweiten optischen Kanals 16a-h des Arrays 14 in einem zweiten und von dem ersten Umfang verschiedenen Umfang, d. h., kanalindividuell zu stabilisieren. Der Umfang bezieht sich dabei auf eine Bildkorrektur, die entlang der ersten und zweiten Bildachse 28 und 32 ausgeführt wird, wobei hier auch Rotationen um Bildachsen und dergleichen einbezogen sind.

In Ausführungsformen ist der elektronische Bildstabilisator 41 ausgebildet, um die elektronische Bildstabilisierung kanalindividuell für jeden optischen Kanal, d.h. für jedes der Teilbilder der Bildsensorbereiche 24a-h auszuführen. Damit lassen sich für den ersten und zweiten optischen Kanal 16a-h unterschiedliche Abbildungsfehler oder gar kanalindividuelle Abbildungsfehler korrigieren.

Die Optiken 64a-h der optischen Kanäle können von einander verschiedene optische Eigenschaften aufweisen. Eine von einander verschiedene optische Eigenschaft wird bspw. durch Fertigungstoleranzen erhalten, so dass sich die Optiken 64a-h in einem Toleranzbereiche von höchstens ±10 %, höchstens ±5 % oder höchstens ±3 % bezüglich einer oder mehrerer optischer Eigenschaften voneinander unterscheiden, etwa einer Brennweite, eines Gesichtsfeldwinkels, eines optischen Durchmessers oder dergleichen.

Es wurde erkannt, dass im Rahmen von fertigungsbedingt unterschiedlichen optischen Eigenschaften der Optiken 64a-h, eine optische Bildstabilisierung durch eine Relativbewegung zwischen dem Bildsensor 12, der Optik 64a-h des jeweiligen optischen Kanals und der Strahlumlenkeinrichtung 18 dazu führt, dass sich die Abbildungen in den Bildsensorbereichen 24a-d unterschiedlich verändern. Dies ist zumindest teilweise darin begründet, dass die für alle optischen Kanäle, d. h., kanalglobale gleichermaßen ausgeführte mechanische Bewegung zur Erzielung einer optischen Bildstabilisierung zu einer unterschiedlichen Veränderung des Strahlengangs durch die Optiken 64a-h führt. Die voneinander verschiedenen optischen Eigenschaften wirken sich nun unterschiedlich oder gar kanalindividuell in den Abbildungen der Bildsensorbereiche 24a-h aus. In anderen Worten resultieren insbesondere aus den unterschiedlichen Brennweiten der Kanäle kanalweise unterschiedliche Bildverschiebungen bei für alle Kanäle gleich einwirkenden Relativbewegungen zwischen Strahlumlenkeinheit und/oder Array und/oder Bildsensor. Durch die mit der optischen Bildstabilisierung kombinierte elektronische Bildstabilisierung kann dies reduziert, d. h., zumindest teilweise ausgeglichen oder kompensiert werden. Dies soll anhand der optischen Eigenschaft Brennweite verdeutlicht werden. Bei zwei sich voneinander unterscheidenden Werten der optischen Brennweite bei Optiken, die auf dasselbe Gesamtgesichtsfeld gerichtet sind, führt die Relativbewegung im Rahmen der optischen Bildstabilisierung dazu, dass die Blickachse und/oder -richtung der optischen Kanäle gleichermaßen verändert werden. Durch die unterschiedlichen Brennweiten in den Optiken 64a-h bewegen sich aber die Teilbilder in den Bildsensorbereichen 24a-h unterschiedlich, was beim Zusammenfügen der Teilbilder, dem Stitching, zu hohem Rechenaufwand oder gar zu Bildfehlern führen kann.

Das Array 14 kann beispielsweise einen Träger 47 aufweisen, durch den die optischen Kanäle 16a-h hindurchlaufen. Hierfür kann der Träger 47 beispielsweise opak ausgebildet sein und transparente Bereiche für die optischen Kanäle 16a-h aufweisen. Innerhalb der oder benachbart zu den transparenten Bereichen und/oder an Endbereichen hiervon können die Optiken 64a-h der optischen Kanäle 16a-h angeordnet sein. Alternativ oder zusätzlich kann der Träger 47 transparent gebildet sein und beispielsweise ein Polymermaterial und/oder ein Glasmaterial aufweisen. An einer Oberfläche des Trägers 47 können die Optiken (Linsen) 64a-h angeordnet sein, die die Abbildung des jeweiligen Teilgesichtsfeldes des Gesamtgesichtsfeldes auf den jeweiligen Bildsensorbereich 24a-h des Bildsensors beeinflussen.

Die Aktoren 36 und/oder 42 können beispielsweise als pneumatischer Aktor, als hydraulischer Aktor, als piezoelektrischer Aktor, als Gleichstrommotor, als Schrittmotor (Stepper-Motor), als thermisch aktuierter Aktor, als elektrostatischer Aktor, als elektrostriktiver Aktor, als magnetostriktiver Aktor oder als Tauchspulenantrieb gebildet sein.

Die Strahlumlenkeinrichtung 18 kann bereichsweise reflektierend gebildet sein. Beispielsweise kann die Strahlumlenkeinrichtung 18 Bereiche oder Strahlumlenkelemente 46a-d umfassen, die ausgebildet sind, um die Strahlengänge 26 so umzulenken, dass die umgelenkten Strahlengänge einen von einander verschiedenen Winkel aufweisen und einen von einander verschiedenes Teilgesichtsfeld eines Gesamtgesichtsfeldes erfassen. Die unterschiedlichen Winkel können durch die Strahlumlenkeinrichtung 18 und/oder die Optiken 64a-h der optischen Kanäle) 16a-h erzeugt werden. Beispielsweise können die Bereiche 46a-d als Facetten eines Facettenspiegels gebildet sein. Die Facetten können eine von einander verschiedene Neigung bezüglich des Arrays 14 aufweisen. Dies kann eine Ablenkung, Beeinflussung, Steuerung und/oder Streuung der Strahlengänge 26 hin zu voneinander verschieden angeordneten Teilgesichtsfeldern ermöglichen. Alternativ kann die Strahlumlenkeinrichtung 18 als einseitig oder beidseitig reflektierend ausgebildete Fläche ausgebildet sein, beispielsweise als Spiegel. Die Fläche kann eben oder abschnittsweise kontinuierlich gekrümmt oder eben gebildet sein und/oder abschnittsweise diskontinuierlich gekrümmt oder eben gebildet sein. Eine Ablenkung der Strahlengänge 26 kann alternativ oder zusätzlich mittels der Optiken 64a-h der optischen Kanäle 16a-h erhalten werden.

In anderen Worten bewirkt eine Relativbewegung zur optischen Bildstabilisierung dieselbe mechanische Auslenkung in allen Kanälen der Multiaperturkamera. Die erzielte Bildverschiebung, die den eigentlichen Wirkmechanismus der optischen Bildstabilisierung ausmacht, hängt jedoch zusätzlich von der Brennweite der Abbildungsoptik eines jeden Kanals ab. Eine Erkenntnis besteht deshalb darin, dass zusätzlich zur optischen Bildstabilisierung, die global für alle Kanäle gleich ausgeführt wird, zusätzlich eine kanalindividuelle elektronische Bildstabilisierung eingeführt wird.. Die Strahlumlenkeinrichtung kann sowohl zur Umlenkung der Blickrichtung als auch zur optischen Bildstabilisierung nutzbar sein.

Die Strahlumlenkeinrichtung kann über den Bereich aller Kanäle eben sein, ein kontinuierliches oder diskontinuierliches Profil aufweisen und/oder stückweise eben, d.h. facettiert, sein, wobei die Übergänge zwischen einzelnen kontinuierlichen oder diskontinuierlichen Profilen zusätzlich lokale Maskierungen zur Herabsetzung der Reflektivität oder mechanische Strukturen aufweisen können, um Bildfehler zu reduzieren bzw. um eine Versteifung des Aufbaus zu ermöglichen, so dass bewegungsinduzierte oder thermisch induzierte Bildfehler gering sein können.

Ein Umschalten zwischen der ersten Position und der zweiten Position der Strahlumlenkeinrichtung kann translativ entlang der Drehachse 44 erfolgen. Eine Bewegung entlang der Rotationsachse 44 kann kontinuierlich oder diskontinuierlich, beispielsweise bistabil oder mehrfach stabil ausgeführt sein. Dies kann beispielsweise als positionsdiskrete Stellungen verstanden werden, zwischen denen die Strahlumlenkeinrichtung 18 bewegt wird. Einfach stabile, bistabile oder mehrfach stabile Positionen können beispielsweise erhalten werden, indem der Aktor 42 oder ein anderer Aktor als Schrittmotor ausgebildet ist. Ist die Strahlumlenkeinrichtung 18 beispielsweise ausgebildet, urh zwischen zwei Positionen hin und her bewegt zu werden, kann eine der Positionen beispielsweise eine Ruheposition des Aktors sein oder hierauf basieren. Der Aktor kann beispielsweise ausgebildet sein, um die translatorische Bewegung gegenüber einer Federkraft auszuführen, die bei Erreichen der jeweils anderen Position eine Gegenkraft ausübt, die bei einer Wegnahme der Kraft des Aktors die Strahlumlenkeinrichtung wieder zurück in ihre Ausgangsposition bewegt. Das bedeutet, dass eine stabile Position auch in Bereichen eines Kräftediagramms erhalten werden kann, die kein lokales Kräfteminimum aufweisen. Beispielsweise kann es sich um ein Kräftemaximum handeln. Alternativ oder zusätzlich kann eine stabile Position basierend auf magnetischen oder mechanischen Kräften zwischen der Strahlumlenkeinrichtung 18 und einem benachbarten Gehäuse oder Substrat erhalten werden. Das bedeutet, der Aktor 42 oder der andere Aktor zum translatorischen Bewegen der Strahlumlenkeinrichtung kann ausgebildet sein, um die Strahlumlenkeinrichtung in eine bistabile oder mehrfach stabile Position zu bewegen. Alternativ können für bistabile Anordnungen der Positionen einfache mechanische Anschläge vorgesehen sein, die zwei Endpositionen definieren, zwischen denen eine Positionsschaltung in den definierten Endlagen erfolgt.

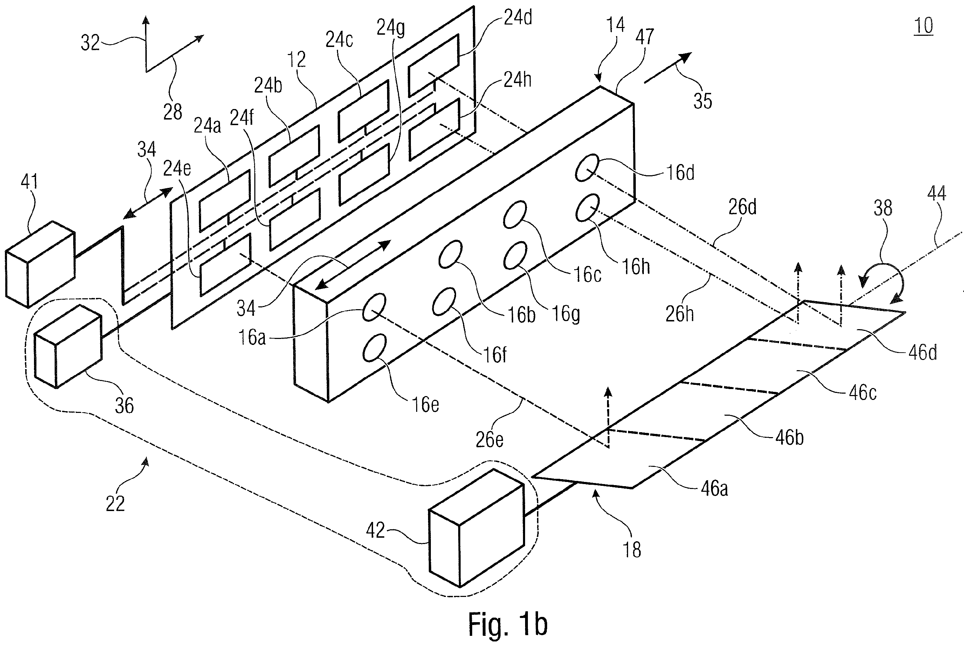

Fig. 1b zeigt eine schematische Ansicht einer Multiaperturabbildungsvorrichtung 10' gemäß einem Ausführungsbeispiel. Die Multiaperturabbildungsvorrichtung 10' ist gegenüber der Multiaperturabbildungsvorrichtung 10 dahingehend modifiziert, dass der Aktor 36 mit dem Bildsensor 12 mechanisch verbunden ist und ausgebildet ist, um den Bildsensor 12 relativ zu dem Array 14 zu bewegen. Die Relativbewegung 34 kann parallel zu der Zeilenerstreckungsrichtung 35 und senkrecht zu den Strahlengängen 26 ausführbar sein.

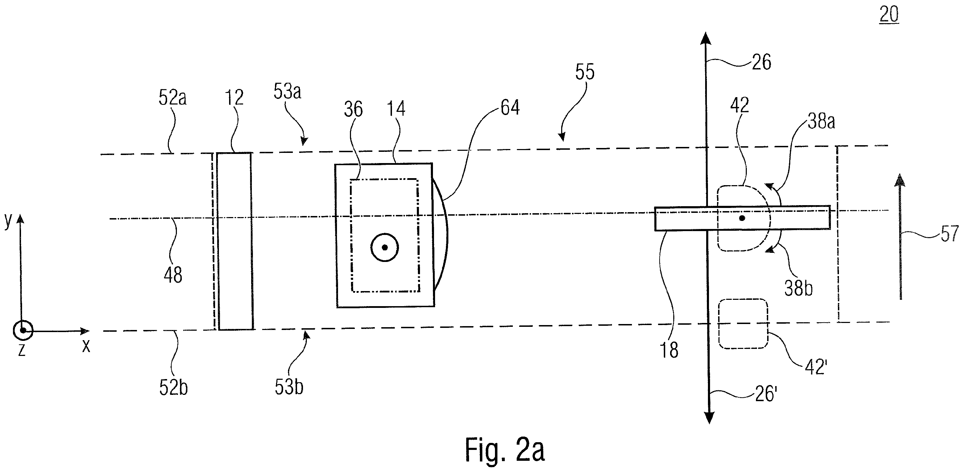

Fig. 2a zeigt eine schematische Seitenschnittansicht einer Multiaperturabbildungsvorrichtung 20 gemäß einem Ausführungsbeispiel. Die Multiaperturabbildungsvorrichtung 20 kann bspw. die Multiaperturabbildungsvorrichtung 10 dahingehend modifizieren, dass die Aktoren 36 und/oder 42 so angeordnet sind, dass sie zumindest teilweise zwischen zwei Ebenen 52a und 52b angeordnet ist, die durch Seiten 53a und 53b eines Quaders 55 aufgespannt werden. Die Seiten 53a und 53b des Quaders 55 können parallel zueinander sowie parallel zu der Zeilenerstreckungsrichtung des Arrays und eines Teils des Strahlengangs der optischen Kanäle zwischen dem Bildsensor und der Strahlumlenkeinrichtung parallel ausgerichtet sein. Das Volumen des Quaders 55 ist minimal und umfasst dennoch den Bildsensor 12, das Array 14 und die Strahlumlenkeinrichtung 18 sowie deren betriebsbedingte Bewegungen. Optische Kanäle des Arrays 14 weisen eine Optik 64 auf, die für jeden optischen Kanal gleich oder verschieden von einander gebildet sein kann.

Ein Volumen der Multiaperturabbildungsvorrichtung kann einen geringen oder minimalen Bauraum zwischen den Ebenen 52a und 52b aufweisen. Entlang der lateralen Seiten oder Erstreckungsrichtungen der Ebenen 52a und/oder 52b kann ein Bauraum der Multiaperturabbildungsvorrichtung groß oder beliebig groß sein. Das Volumen des virtuellen Quaders ist bspw, von einer Anordnung des Bildsensors 12, des einzeiligen Arrays 14 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 52a und 52b zueinander gering oder minimal wird. Eine möglichst dünne Ausgestaltung der Multiaperturabbildungsvorrichtung ist insbesondere im Bereich mobiler Anwendungen, etwa für Mobiltelefone oder Tablets gewünscht. Gegenüber anderen Anordnungen der Komponenten kann das Volumen und/oder der Abstand anderer Seiten des virtuellen Quaders vergrößert sein.

Durch gepunktete Linien ist der virtueller Quader 55 dargestellt. Die Ebenen 52a und 52b können zwei Seiten des virtuellen Quaders 55 umfassen oder dadurch aufgespannt sein. Eine Dickenrichtung 57 der Multiaperturabbildungsvorrichtung 20 kann normal zu den Ebenen 52a und/oder 52b und/oder parallel zu der y-Richtung angeordnet sein.

Der Bildsensor 12, das Array 14 und die Strahlumlenkeinrichtung 18 können so angeordnet sein, dass ein senkrechter Abstand zwischen den Ebenen 52a und 52b entlang der Dickenrichtung 57, der vereinfachend jedoch ohne einschränkende Wirkung als Höhe des Quaders bezeichnet werden kann, minimal ist, wobei auf eine Minimierung des Volumens, das bedeutet der anderen Abmessungen des Quaders verzichtet werden kann. Eine Ausdehnung des Quaders 55 entlang der Richtung 57 kann minimal und im Wesentlichen durch die Ausdehnung der optischen Komponenten der Abbildungskanäle, d. h., des Arrays 14, des Bildsensors 12 und der Strahlumlenkeinrichtung 18 entlang der Richtung 57 vorgegeben sein.

Ein Volumen der Multiaperturabbildungsvorrichtung kann einen geringen oder minimalen Bauraum zwischen den Ebenen 52a und 52b aufweisen. Entlang der lateralen Seiten oder Erstreckungsrichtungen der Ebenen 52a und/oder 52b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 52a und 52b zueinander gering oder minimal wird. Gegenüber anderen Anordnungen der Komponenten kann das Volumen und/oder der Abstand anderer Seiten des virtuellen Quaders vergrößert sein.

Die Aktoren, etwa der Aktor 36 und/oder 42 der Multiaperturabbildungsvorrichtung können eine Abmessung oder Ausdehnung parallel zu der Richtung 57 aufweisen. Ein Anteil von höchstens 50 %, höchstens 30 % oder höchstens 10 % der Abmessung des Aktors oder der Aktoren kann ausgehend von einem Bereich zwischen den Ebenen 52a und 52b über die Ebene 52a und/oder 52b hinausragen oder aus dem Bereich herausragen. Das bedeutet, dass die Aktoren höchstens unwesentlich über die Ebene 52a und/oder 52b hinausragt. Gemäß Ausführungsbeispielen ragen die Aktoren nicht über die Ebenen 52a und 52b hinaus. Vorteilhaft daran ist, dass eine Ausdehnung der Multiaperturabbildungsvorrichtung 10 entlang der Dickenrichtung bzw. Richtung 57 durch die Aktoren nicht vergrößert wird.

Der Bildstabilisator 22 bzw. die Aktoren 36 und/oder 42 können eine Abmessung oder Ausdehnung parallel zu der Dickenrichtung 57 aufweisen. Ein Anteil von höchstens 50 %, höchstens 30 % oder höchstens 10 % der Abmessung kann ausgehend von einem Bereich zwischen den Ebenen 52a und 52b über die Ebene 52a und/oder 52b hinausragen oder aus dem Bereich herausragen, wie es bspw. für den Aktor 42' dargestellt ist, der eine versetzte Anordnung des Aktors 42 andeutet. Das bedeutet, dass die Aktoren 36 und/oder 42 höchstens unwesentlich über die Ebene 52a und/oder 52b hinausragen. Gemäß Ausführungsbeispielen ragen die Aktoren 36 und/oder 42 nicht über die Ebenen 52a und 52b hinaus. Vorteilhaft daran ist, dass eine Ausdehnung der Multiaperturabbildungsvorrichtung 20 entlang der Dickenrichtung 57 durch die Aktoren 36 bzw. 42 nicht vergrößert wird.

Obwohl hier verwendete Begriffe wie oben, unten, links, rechts, vorne oder hinten zur besseren Anschaulichkeit verwendet werden, sollen diese keinerlei einschränkende Wirkung entfalten. Es versteht sich, dass basierend auf einer Drehung oder Verkippung im Raum diese Begriffe wechselseitig vertauschbar sind. Beispielsweise kann die x-Richtung von dem Bildsensor 12 ausgehend hin zu der Strahlumlenkeinrichtung 18 als vorne oder vorwärts verstanden werden. Eine positive y-Richtung kann beispielsweise als oben verstanden werden. Ein Bereich entlang der positiven oder negativen z-Richtung abseits oder beabstandet des Bildsensors 12, des Arrays 14 und/oder der Strahlumlenkeinrichtung 18 kann als neben der jeweiligen Komponente verstanden werden. Vereinfacht ausgedrückt kann der Bildstabilisator zumindest einen Aktor 36 bzw. 42 umfassen. Der zumindest eine Aktor 36 und/oder 42 kann in der Ebene 48 bzw. zwischen den Ebenen 52a und 52b angeordnet sein.

In anderen Worten können die Aktoren 36 und/oder 42 vor, hinter oder neben dem Bildsensor 12, dem Array 14 und/oder der Strahlumlenkeinrichtung 18 angeordnet sein. Gemäß Ausführungsbeispielen sind die Aktoren 36 und 42 mit einem maximalen Umfang von 50 %, 30 % oder 10 % außerhalb des Bereichs zwischen den Ebenen 52a und 52b angeordnet. Das bedeutet, dass der zumindest eine Aktor 36 und/oder der Bildstabilisator 22 entlang der Dickenrichtung 57 senkrecht zu der Ebene 48 um höchstens 50 % der Abmessung des Aktors 36 bzw. 42 des Bildstabilisators entlang der Dickenrichtung 57 aus der Ebene bzw. dem Bereich zwischen den maximalen Abmessungen 52a-52b herausragt. Dies ermöglicht eine geringe Abmessung der Multiaperturabbildungsvorrichtung 20 entlang der Dickenrichtung 57.

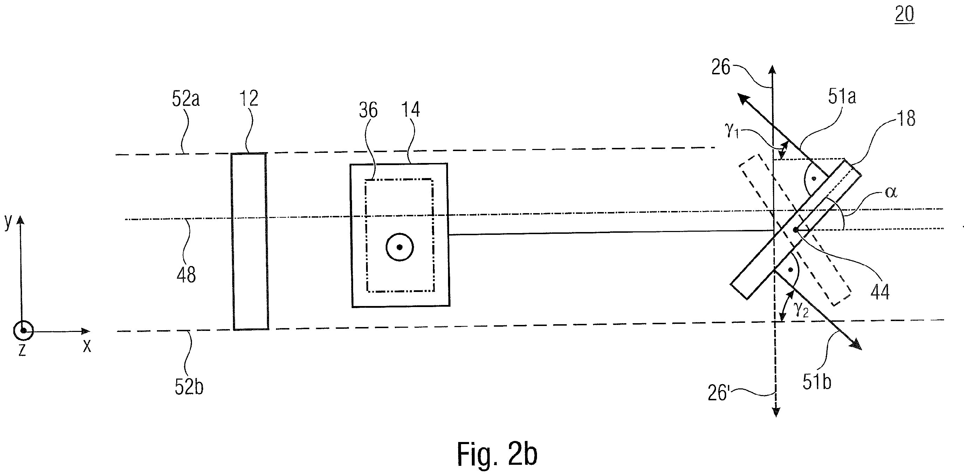

Fig. 2b zeigt eine schematische Seitenschnittansicht der Multiaperturabbildungsvorrichtung 20 wobei die Strahlengänge 26 und 26' verschiedene Blickrichtungen der Multiaperturabbildungsvorrichtung 20 andeuten. Die Multiaperturabbildungsvorrichtung kann ausgebildet sein, um eine Verkippung der Strahlumlenkeinrichtung um eine Winkel α zu verändern, so dass wechselweise unterschiedliche Hauptseiten der Strahlumlenkeinrichtung 18 dem Array 14 zugewandt angeordnet sind. Die Multiaperturabbildungsvorrichtung 20 kann einen Aktor umfassen, der ausgebildet ist, um die Strahlumlenkeinrichtung 18 um die Rotationsachse 44 zu verkippen. Beispielsweise kann der Aktor ausgebildet sein, um die Strahlumlenkeinrichtung 18 in eine erste Stellung zu bewegen, in der die Strahlumlenkeinrichtung 18 den Strahlengang 26 der optischen Kanäle des Arrays 14 in die positive y-Richtung umlenkt. Hierfür kann die Strahlumlenkeinrichtung 18 in der ersten Position, beispielsweise einen Winkel α von > 0° und < 90°, von zumindest 10° und höchstens 80° oder von zumindest 30° und höchstens 50°, beispielsweise 45° aufweisen. Der Aktor kann ausgebildet sein, um die Strahlumlenkeinrichtung in einer zweiten Stellung so um die Rotationsachse 44 auszulenken, dass die Strahlumlenkeinrichtung 18 den Strahlengang der optischen Kanäle des Arrays 14 hin zu der negativen y-Richtung umlenkt, wie es durch den Strahlengang 26' und die gestrichelte Darstellung der Strahlumlenkeinrichtung 18 dargestellt ist. Beispielsweise kann die Strahlumlenkeinrichtung 18 beidseitig reflektierend ausgebildet sein, so dass in der ersten Stellung ein erster Strahlengang 26 bzw. 26' umlenkt oder reflektiert wird. Gemäß einer vorteilhaften Ausgestaltung ist die Multiaperturabbildungsvorrichtung 20 ausgebildet, um eine Umschaltung zwischen der ersten Stellung und der zweiten Stellung so auszuführen, dass zwischen den beiden Stellungen eine Nebenseite dem Array 14 zugeordnet ist, aber eine Orientierung gemäß derer eine Hauptseiten dem Array 14 vollständig zugewandt ist, vermieden ist. Dies kann auch so verstanden werden, dass während eines Wechsels zwischen dem ersten und dem zweiten Betriebszustand oder Stellung durch die rotatorische Bewegung eine Oberflächennormale 51a der ersten Hauptseite und eine zweite Oberflächennormale 51b der zweiten Hauptseite zu jedem Zeitpunkt einen Winkel $\gamma_1$ und $\gamma_2$ von zumindest 10° bezogen auf eine Richtung hin zu dem Bildsensor und ggf. parallel zu einer Oberflächennormalen des Bildsensors 12 aufweisen. So kann vermieden werden, dass einer der Winkel $\gamma_1$ und $\gamma_2$ 0° oder 180° beträgt, was eine hohe oder näherungsweise maximale Ausdehnung der Strahlumlenkeinrichtung 18 entlang der Dickenrichtung bedeuten kann.

Fig. 3 zeigt eine schematische Aufsicht auf eine Multiaperturabbildungsvorrichtung 30 gemäß einem Ausführungsbeispiel. Die Multiaperturabbildungsvorrichtung 30 kann gegenüber der Multiaperturabbildungsvorrichtung 10 und/oder 20 dahin gehend modifiziert sein, dass die Multiaperturabbildungsvorrichtung 30 eine Fokussiereinrichtung 54 umfasst, die ausgebildet ist, um einen Fokus der Multiaperturabbildungsvorrichtung 30 zu verändern. Dies kann basierend auf einem veränderlichen Abstand 56 zwischen dem Bildsensor 12 und dem Array 14 erfolgen, wie es durch den Abstand 56' dargestellt ist.

Die Fokussiereinrichtung 54 kann einen Aktor 58 umfassen, der ausgebildet ist, um sich bei einer Aktuierung zu verformen und/oder um eine Relativbewegung zwischen dem Bildsensor 12 und dem Array 14 bereitzustellen. Beispielhaft ist dies für die Multiaperturabbildungsvorrichtung 30 so dargestellt, dass der Aktor 58 ausgebildet ist, um das Array 14 entlang der positiven und/oder negativen x-Richtung gegenüber dem Bildsensor 12 zu verschieben. Beispielsweise kann das Array 14 an einer Seite so gelagert sein, dass es basierend auf einer Aktuierung des Aktors 58 eine Bewegung entlang einer positiven oder negativen x-Richtung erfährt und entlang einer positiven und/oder negativen z-Richtung im Wesentlichen unbewegt bleibt. Eine zusätzliche Bewegung entlang der positiven und/oder negativen z-Richtung für eine optische Bildstabilisierung kann beispielsweise basierend auf einer Aktuierung des Aktors 36 erhalten werden. Gemäß weiteren Ausführungsbeispielen ist der Aktor 58 bzw. die Fokussiereinrichtung 54 ausgebildet, um die Relativbewegung zwischen dem Bildsensor 12 und dem Array 14 entlang der x-Achse basierend auf einer translatorischen Verschiebung des Bildsensors 12 gegenüber dem Array 14 zu erhalten. Gemäß weiteren Ausführungsbeispielen können der Bildsensor 12 und das Array 14 bewegt werden. Gemäß weiteren Ausführungsbeispielen kann die Fokussiereinrichtung 54 zumindest einen weiteren Aktor aufweisen. Beispielsweise können ein erster Aktor und ein zweiter Aktor an zwei gegenüberliegenden Bereichen des Arrays 14 angeordnet sein, so dass bei einer Aktuierung der Aktoren eine Anforderung an eine Lagerung des bewegten Arrays 14 (alternativ oder zusätzlich zu dem Bildsensor 12) reduziert ist. Zusätzlich kann der Aktor 58 oder ein weiterer Aktor ausgebildet sein, um einen Abstand zwischen dem einzeiligen Array 14 und der Strahlumlenkeinrichtung 18 im Wesentlichen oder auch bei Nutzung keines zusätzlichen Aktors exakt konstant zu halten, d. h., die Strahlumlenkeinrichtung 18 in einem Umfang zu bewegen, wie das einzeilige Array 14. Die Fokussiereinrichtung 54 kann ausgebildet sein, um eine Autofokusfunktion durch eine relative translatorische Bewegung (Fokussierungsbewegung) zwischen dem Bildsensor 12 und dem Array 14 entlang einer Flächennormalen des Bildsensors 12 zu ermöglichen. Die Strahlumlenkeinrichtung 18 kann dabei durch entsprechende konstruktive Auslegung oder Nutzung des Aktors 42 oder eines weiteren Aktors simultan zur Fokussierungsbewegung mitbewegt werden. Das bedeutet, dass ein Abstand zwischen dem Array 14 und der Strahlumlenkeinrichtung unverändert bleibt und/oder dass die Strahlumlenkeinrichtung 18 gleichzeitig oder zeitversetzt in einem gleichen oder vergleichbaren Umfang wie die Fokussierungsbewegung bewegt wird, so dass zumindest zu einem Zeitpunkt einer Aufnahme des Gesichtsfeldes durch die Multiaperturabbildungsvorrichtung unverändert verglichen mit einem Abstand vor einer Veränderung des Fokus ist. Dies kann derart erfolgen, dass die Strahlumlenkeinrichtung 18 gemeinsam, d. h., simultan mit dem Aktor 42 bewegt wird, so dass ein Abstand zwischen dem Array 14 und der Strahlumlenkeinrichtung konstant bleibt, oder kompensiert wird. Das bedeutet, dass ein Abstand zwischen dem Array 14 und der Strahlumlenkeinrichtung 18 unverändert bleiben kann und/oder dass die Strahlumlenkeinrichtung 18 gleichzeitig oder zeitversetzt in einem gleichen oder vergleichbaren Umfang wie die Fokussierungsbewegung bewegt wird, so dass der Abstand zwischen Array 14 und der Strahlumlenkeinrichtung 18 zumindest zu einem Zeitpunkt einer Aufnahme des Gesichtsfeldes durch die Multiaperturabbildungsvorrichtung unverändert verglichen mit einem Abstand vor einer Veränderung des Fokus ist. Alternativ kann die Strahlumlenkeinrichtung 18 ruhend oder von der Autofokusbewegung ausgenommen sein.

Der Aktor 58 kann beispielsweise als piezoelektrischer Aktor, etwa als Biegebalken (etwa ein Bimorph, Trimorph oder dergleichen) ausgeführt sein. Alternativ oder zusätzlich kann die Fokussiereinrichtung 54 einen Tauchspulenantrieb, einen pneumatischen Aktor, einen hydraulischen Aktor, einen Gleichstrommotor, einen Schrittmotor, einen thermisch aktuierbaren Aktor oder Biegebalken, einen elektrostatischen Aktor, einen elektrostriktiven und/oder einen magnetostriktiven Antrieb umfassen.

Wie es im Zusammenhang mit dem Bildstabilisator und einer Anordnung desselben in der Ebene 48 bzw. in einem Bereich zwischen den Ebenen 52a und 52b beschrieben wurde, kann der zumindest eine Aktor 58 der Fokussiereinrichtung 54 zumindest teilweise zwischen den Ebenen 52a und 52b angeordnet sein. Alternativ oder zusätzlich kann der zumindest eine Aktor 58 in einer Ebene angeordnet sein, in welcher der Bildsensor 12, das Array 14 und die Strahlumlenkeinrichtung 18 angeordnet sind. Beispielsweise kann der Aktor 58 der Fokussiereinrichtung 54 entlang der Dickenrichtung 57 senkrecht zu der Ebene 48, in welcher der Bildsensor 12, das Array 14 und die Strahlumlenkeinrichtung 18 angeordnet sind, um höchstens 50 % der Abmessung des Aktors 58 der Fokussiereinrichtung 54 entlang der Dickenrichtung 57 aus dem Bereich zwischen den Ebenen 52a und 52b herausragen. Gemäß Ausführungsbeispielen ragt der Aktor um höchstens 30 % aus dem Bereich zwischen den Ebenen 52a und 52b heraus. Gemäß einem anderen Ausführungsbeispiel ragt der Aktor 54 um höchstens 10 % aus dem Bereich heraus oder befindet sich vollständig innerhalb des Bereichs. Das bedeutet, dass entlang der Dickenrichtung 57 kein zusätzlicher Bauraumbedarf für die Fokussiereinrichtung 54 erforderlich ist, was vorteilhaft ist. Weist beispielsweise das Array 14 ein transparentes Substrat (Träger) 62 mit daran angeordneten Linsen 64a-d auf, so kann eine Abmessung des Arrays 14 und ggf. der Multiaperturabbildungsvorrichtung 30 entlang der Dickenrichtung 57 gering oder minimal sein. Unter Bezugnahme auf Fig. 2a kann dies bedeuten, dass der Quader 55 eine geringe Dicke entlang der Richtung 57 aufweist oder dass die Dicke von dem Substrat 62 unbeeinflusst ist. Das Substrat 62 kann von den für die Abbildung in den einzelnen optischen Kanälen genutzten optischen Strahlengängen passiert werden. Die optischen Kanäle der Multiaperturabbildungsvorrichtung können das Substrat 62 zwischen der Strahlumlenkeinrichtung 18 und einem Bildsensor 12 durchqueren.

Bei den Linsen 64a-d kann es sich beispielsweise im Flüssigkeitslinsen handeln, d.h. ein Aktor kann ausgebildet sein, um die Linsen 64a-d anzusteuern. Flüssigkeitslinsen können ausgebildet sein, um kanalweise individual die Brechkraft und mithin Brennweite und Bildlage anzupassen und zu variieren.

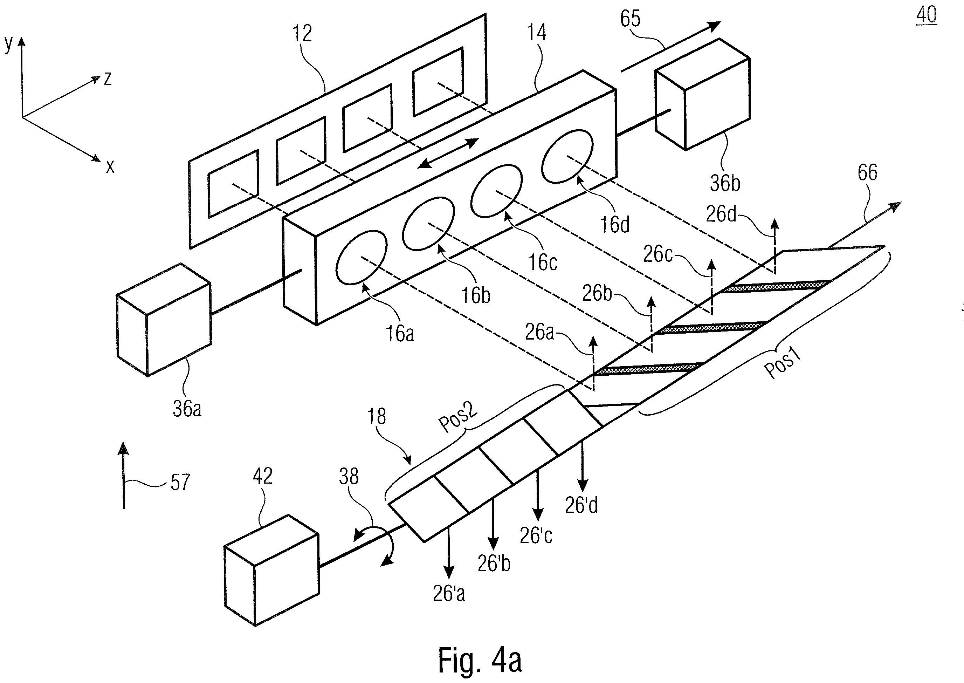

Fig. 4a zeigt eine schematische perspektivische Ansicht einer Multiaperturabbildungsvorrichtung 40 gemäß einem Ausführungsbeispiel. Verglichen mit der Multiaperturabbildungsvorrichtung 10 ist das Array 14 beispielsweise einzeilig ausgebildet, das bedeutet, alle optischen Kanäle 16a-d können entlang einer Zeilenerstreckungsrichtung des Arrays 14 in einer einzigen Zeile angeordnet sein. Die Bezeichnung einzeilig kann dabei eine Abwesenheit weiterer Zeilen bedeuten. Eine einzeilige Ausführung des Arrays 14 ermöglicht eine geringe Abmessung des Arrays und möglicherweise der Multiaperturabbildungsvorrichtung 40 entlang der Dickenrichtung 57. Der optische Bildstabilisator umfasst Aktoren 36a und 36b, die gemeinsam den Aktor 36 bilden, das bedeutet, ein hierin beschriebener Aktor kann auch durch mehrere Aktoren oder Stellglieder implementiert sein und/oder mehrere Aktoren können zu einem gemeinsamen Aktor zusammengefasst werden.

Die Multiaperturabbildungsvorrichtung 40 kann ausgebildet sein, um basierend auf der Strahlumlenkeinrichtung 18 Gesichtsfelder in voneinander verschiedenen Richtungen zu erfassen. Beispielsweise kann die Strahlumlenkeinrichtung eine erste Position oder Stellung Pos1 und eine zweite Position oder Stellung Pos2 aufweisen. Die Strahlumlenkeinrichtung kann zwischen der ersten Stellung Pos1 und der zweiten Stellung Pos2 basierend auf einer translatorischen oder rotatorischen Bewegung umschaltbar sein. Bspw. kann die Strahlumlenkeinrichtung 18 entlang der Zeilenerstreckungsrichtung z des einzeiligen Arrays 14 translatorisch bewegbar sein, wie es durch eine translatorische Bewegung 66 angedeutet ist. Die translatorische Bewegung 66 kann bspw. im Wesentlichen parallel zu einer Zeilenerstreckungsrichtung 65 angeordnet sein, entlang derer die zumindest eine Zeile des Arrays 14 angeordnet ist. Die translatorische Bewegung kann bspw. nutzbar sein, um unterschiedliche Facetten vor den Optiken der optischen Kanäle 16a-d zu platzieren, um unterschiedliche Blickrichtungen der Multiaperturabbildungsvorrichtung 40 zu erhalten. Die Strahlumlenkeinrichtung 18 kann ausgebildet sein, um in der ersten Stellung Pos1 die Strahlengänge 26a-d in eine erste Richtung umzulenken, beispielsweise zumindest teilweise in eine positive y-Richtung. Die Strahlumlenkeinrichtung 18 kann ausgebildet sein, um in der zweiten Stellung Pos2 die Strahlengänge 26a-d, d.h. jedes optischen Kanals 16a-d, in eine hiervon verschiedene Richtung, beispielsweise zumindest teilweise entlang der negativen y-Richtung zu lenken. Beispielsweise kann der Aktor 42 ausgebildet sein, um basierend auf einer Bewegung der Strahlumlenkeinrichtung 18 entlang der Bewegungsrichtung 66 die Strahlumlenkeinrichtung 18 von der ersten Stellung Pos1 in die zweite Stellung Pos2 zu bewegen. Der Aktor 42 kann ausgebildet sein, um die translatorische Bewegung entlang der Bewegungsrichtung 66 mit der Rotationsbewegung 38 zu überlagern. Alternativ kann die Multiaperturabbildungsvorrichtung 40 auch einen weiteren Aktor umfassen, der ausgebildet ist, um die Strahlurnlenkeinrichtung entlang der Bewegungsrichtung 66 oder entgegengesetzt hierzu zu bewegen.

Wie es im Zusammenhang mit der Fig. 2b beschrieben ist, kann der Aktor 42 ausgebildet sein, um die erste bzw. zweite Stellung der Strahlumlenkeinrichtung 18 basierend auf einer Rotation derselben zu erhalten. Die Bewegung zwischen der ersten Stellung Pos1 und der zweiten Stellung Pos2 kann sowohl für eine Rotationsbewegung zum Umschalten zwischen den Stellungen als auch für die translatorische Bewegung entlang der Richtung 66 mit der Rotationsbewegung 38 überlagerbar sein.

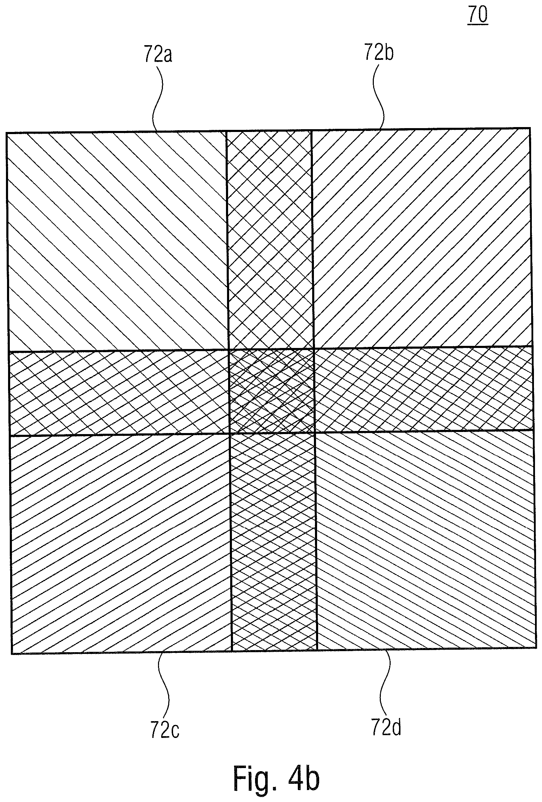

Fig. 4b zeigt eine schematische Darstellung eines Gesamtgesichtsfelds 70, wie es beispielsweise mit einer vorangehend beschriebenen Multiaperturabbildungsvorrichtung erfassbar ist, etwa der Multiaperturabbildungsvorrichtung 10, 20, 340 oder 40, wobei etwa die Multiaperturabbildungsvorrichtung 10 das Gesamtgesichtsfeld 70 auch in eine höhere oder auch geringere Anzahl von Teilgesichtsfeldern 72a-d untergliedern kann. Die Strahlengänge der optischen Kanäle der Multiaperturabbildungsvorrichtungen können auf voneinander verschiedene Teilgesichtsfelder 72a-d lenkbar sein, wobei jedem optischen Kanal ein Teilgesichtsfeld 72a-d zugeordnet werden kann. Beispielsweise überlappen die Teilgesichtsfelder 72a-d miteinander, um eine Aneinanderfügung einzelner Teilbilder zu einem Gesamtbild zu ermöglichen. Weist die Multiaperturabbildungsvorrichtung eine von vier verschiede Anzahl von optischen Kanälen auf, kann das Gesamtgesichtsfeld 70 eine von vier verschiedener Anzahl von Teilgesichtsfeldern aufweisen. Alternativ oder zusätzlich kann zumindest ein Teilgesichtsfeld 72a-d von einem zweiten oder einer höheren Anzahl von optischen Kanälen einer höheren Anzahl von Modulen (Multiaperturabbildungsvorrichtungen) erfasst werden, um Stereo-, Trio-,Quattro-Kameras aufzubauen um damit dreidimensionale Objektdaten aufzeichnen zu können. Die Module können einzeln oder als ein zusammenhängendes System ausgelegt sein und an beliebiger Stelle in einem Gehäuse der Multiaperturabbildungsvorrichtung angeordnet sein. Die Bilder der unterschiedlichen Module, die zusammen die Stereo-, Trio- oder Quattro-Kameras bilden, können um Bruchteile eines Pixels verschoben sein, und ausgebildet sein, um Verfahren der Superresolution zu implementieren. Eine Anzahl von optischen Kanälen und/oder eine Anzahl von Multiaperturabbildungsvorrichtungen und/oder eine Anzahl von Teilgesichtsfeldern ist beispielsweise beliebig und kann eine Anzahl von zumindest zwei, zumindest drei, zumindest vier, zumindest zehn, zumindest 20 oder einen noch höheren Wert aufweisen. Die optischen Kanäle der weiteren Zeile können ebenfalls jeweils überlappende Teilbereiche aufnehmen und zusammen das Gesamtgesichtsfeld abdecken. Dies ermöglicht den Erhalt eines Stereo-, Trio-, Quattro-, usw. Aufbaus von Arraykameras, die aus Kanälen bestehen, die teilweise überlappen und innerhalb ihrer Teilgruppierung das Gesamtgesichtsfeld abdecken.

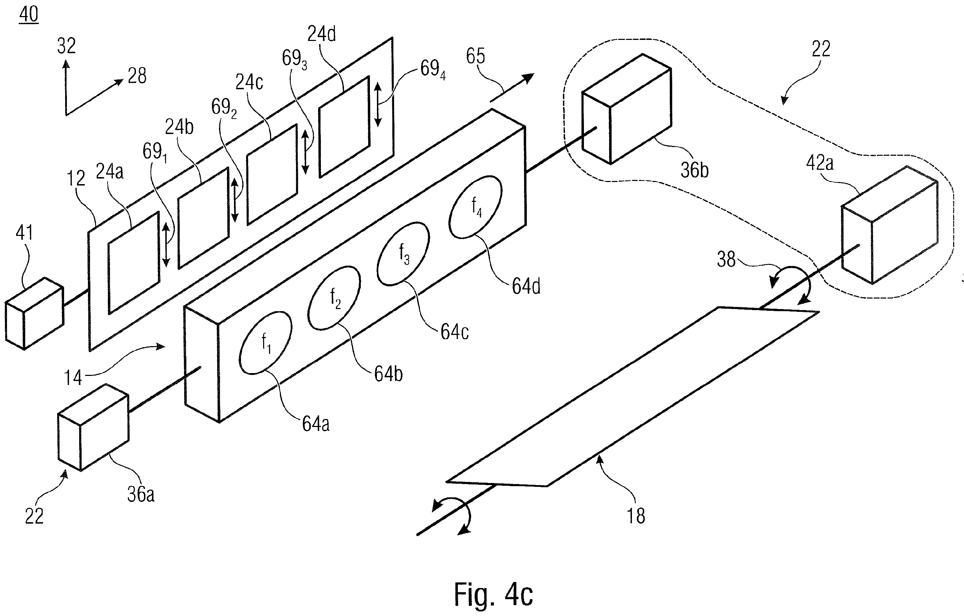

Fig. 4c ist eine schematische perspektivische Darstellung der Multiaperturabbildungsvorrichtung 40, anhand derer eine vorteilhafte Ausgestaltung einer Kombination der optischen Bildstabilisierung und der elektronischen Bildstabilisierung erläutert wird. Der optische Bildstabilisator 22 umfasst Aktoren 36a, 36b und 42, wobei die Aktoren 36a und 36b ausgebildet sind, um die optische Bildstabilisierung der Abbildungen der Teilgesichtsfelder in den Bildsensorbereichen 24a bis 24d durch eine Verschiebung des Arrays 14 entlang der Zeilenerstreckungsrichtung 65 zu erreichen. Ferner ist der optische Bildstabilisator bspw, ausgebildet, um eine optische Bildstabilisierung entlang der Bildachse 32 durch die Rotationsbewegung 38 zu erhalten. Bspw. weisen die Optiken 64a-d des Arrays 14 eine innerhalb eines Toleranzbereichs von höchstens 10 %, höchstens 5 % oder höchstens 3 % von einander verschiedene Brennweite $f_1$ bis $f_4$ auf. Die kanalglobale Rotationsbewegung 38 führt im Zusammenspiel mit den unterschiedlichen Brennweiten $f_1$ bis $f_4$ zu einer unterschiedlichen Verschiebung $69_1$ bis $69_4$ der Abbilder in den Bildsensorbereichen 24a-d. Das bedeutet, dass der optische Bildstabilisator 22 durch die kanalglobale Rotationsbewegung 38 unterschiedliche Effekte in den Abbildungen erzielt, so dass zumindest eine, mehrere oder alle Abbildungen von einem theoretischen fehlerfreien Zustand abweichen. Der optische Bildstabilisator 22 kann ausgebildet sein, um die Abweichungen aller Bilder global zu minimieren, was jedoch dazu führen kann, dass in jedem der Abbilder Fehler entstehen. Alternativ kann der optische Bildstabilisator 22 ausgebildet sein, um eine Referenzabbildung in einem der Bildsensorbereiche 22 auszuwählen und die Steuerung des Aktors 42 so auszuführen, dass die Abbildung in dem Referenzabbild oder Referenzkanal möglichst exakt ist, was auch als fehlerfrei bezeichnet werden kann. Das bedeutet, dass durch die kanalglobale optische Bildstabilisierung ein Kanal bezogen auf die beeinflusste Bildrichtung fehlerfrei gehalten werden kann, während die anderen Kanäle bedingt durch die unterschiedlichen Brennweiten $f_1$ bis $f_4$ von dieser Referenzabbildung abweichen. In anderen Worten, wird ein Kanal mit dem mechanischen realisierten optischen Bildstabilisator korrigiert, der für alle Kanäle eine Wirkung entfaltet, jedoch nicht alle Kanäle stabil hält. Diese weiteren Kanäle werden mit dem elektronischen Bildstabilisator zusätzlich korrigiert.

Der elektronische Bildstabilisator 41 kann ausgebildet sein, um eine kanalindividuelle elektronische Bildstabilisierung in jedem Kanal nach einem festgelegten funktionellen Zusammenhang auszuführen, der und von den Relativbewegungen zwischen dem Bildsensor 12, dem Array 14 und der Strahlumlenkeinrichtung 18 abhängt. Der elektronische Bildstabilisator 41 kann ausgebildet sein, um jede Abbildung einzeln und individuell zu stabilisieren. Der elektronische Bildstabilisator 41 kann hierfür globale Werte nutzen, etwa die Kamerabewegung oder dergleichen, um die optische Qualität der Bilder zu erhöhen. Erfindungsgemäß wird in einer ersten Implementierung der elektronische Bildstabilisator 41 ausgebildet, um eine elektronische Bildkorrektur ausgehend von einer Referenzabbildung des optischen Bildstabilisators 22 auszuführen. Die unterschiedlichen Brennweiten können den funktionellen Zusammenhang zwischen den unterschiedlichen Änderungen in den Abbildungen durch die optische Bildstabilisierung in bevorzugt linearer Form bereitstellen, etwa in der Form:

$$\text{Abbildungsfehler} = f(f_i, \text{Relativbewegung}),$$

das bedeutet, der Abbildungsfehler global oder bezogen den Referenzkanal ist darstellbar als Funktion der Brennweite oder Brennweitenunterschiede und der ausgeführten Relativbewegung zum Wechsel der Blickrichtung oder zur optischen Bildstabilisierung. Der elektronische Bildstabilisator 41 kann ein Ausmaß oder Relativbewegung zwischen Bildsensor 12, Array 14 und Strahlumlenkeinrichtung 18 mit den Brennweiten $f_1$ bis $f_4$ oder Brennweitendifferenzen bezogen auf den Referenzkanal verknüpfen, um eine zuverlässige Information über die auszuführende elektronische Bildstabilisierung zu erhalten, und, um den funktionellen Zusammenhang herzustellen und/oder auszunutzen. Die erforderlichen Daten der optischen Eigenschaften und/oder des funktionellen Zusammenhangs können während einer Kalibrierung gewonnen werden. Die Ausrichtung von Bildern an einander zum Bestimmen einer Verschiebung eines Bildes gegenüber einem anderen Bild kann auch durch Bestimmen eines übereinstimmendes Merkmals in den Abbildern der Teilgesichtsfelder erfolgen, etwa Kantenverläufe, Objektgrößen oder dergleichen. Dies kann bspw. durch den elektronischen Bildsensor 41 identifiziert werden, der ferner ausgebildet sein kann um die elektronische Bildstabilisierung basierend auf einem Vergleich von Bewegungen des Merkmals in dem ersten und zweiten Abbild bereitzustellen. Die kanalindividuelle elektronische Bildstabilisierung kann somit durch eine kanalindividuelle Bildauswertung der Bewegung von Bilddetails erfolgen.

Alternativ oder zusätzlich zu einem Vergleich in unterschiedlichen Bildern kann auch ein Vergleich des Merkmals innerhalb desselben Bildes erfolgen, insbesondere zu zwei zeitlich beabstandeten Aufnahmen oder Frames. Der optische Bildstabilisator 41 kann ausgebildet sein, um in dem entsprechenden Teilbild zu einem ersten Zeitpunkt und zu einem Zeitpunkt ein übereinstimmendes Merkmal zu identifizieren, und um die elektronische Bildstabilisierung basierend auf einem Vergleich von Bewegungen des Merkmals in dem ersten Abbild bereitzustellen. Der Vergleich kann bspw. eine Verschiebung angeben, um die das Merkmal durch eine Relativbewegung verschoben wurde und um die das Bild zurückzuschieben ist, um den Bildfehler zumindest teilweise zu korrigieren.

Der optische Bildstabilisator kann genutzt werden, um ein Abbild des abgebildeten Teilgesichtsfeldes eines Referenzkanals, etwa das Abbild im Bildsensorbereich 24a, zu stabilisieren. Der elektronische Bildstabilisator ist bspw. 41 ausgebildet, um eine Bildstabilisierung kanalindividuell für von dem Referenzkanal verschiedene optische Kanäle, die auf die Bildsensorbereiche 24b, 24c und 24d abbilden, auszuführen. Die Multiaperturabbildungsvorrichtung ist erfindungsgemäß in einer zweiten Implementierung ausgebildet, um den Referenzkanal ausschließlich optisch zu stabilisieren. Das bedeutet, in einer Ausführungsform kann eine ausreichend gute Bildstabilisierung in dem Referenzkanal erreicht werden, indem allein die mechanisch erzielte optische Bildstabilisierung genutzt wird. Für die anderen Kanäle erfolgt zusätzlich eine elektronische Bildstabilisierung, um den zuvor beschriebenen Effekt einer unzureichenden optischen Bildstabilisierung infolge Brennweitenunterschiede teilweise oder vollständig zu kompensieren, wobei die elektronische Stabilisierung in jedem Kanal individuell erfolgt.

Gemäß einer weiteren Ausführungsform ist es weiterhin möglich, dass jeder Kanal der Multiaperturabbildungsvorrichtung über eine individuelle elektronische Bildstabilisierung verfügt. Die für jeden Kanal der Multiaperturabbildungsvorrichtung individuell durchgeführte elektronische Bildstabilisierung kann dabei derart erfolgen, dass ein festgelegter funktionaler Zusammenhang zwischen den zu realisierenden Bildverschiebungen in den einzelnen Kanälen ausgenutzt wird. Beispielweise beträgt die Verschiebung entlang der Richtung 32 in einem Kanal das 1,1-fache, das 1,007-fache, das 1,3-fache oder das 2 oder 5-fache der Verschiebung entlang der Richtung 32 in einer anderen Abbildung. Weiterhin kann dieser kanalindividuelle funktionale Zusammenhang von den Relativbewegungen zwischen Strahlumlenkeinheit und/oder Array und/oder Bildsensor abhängen, wobei dieser linear sein kann oder einer Winkelfunktion entsprechen kann, die einen Rotationswinkel der Strahlumlenkeinrichtung auf einen Umfang der elektronischen Bildstabilisierung entlang der Bildrichtung abbildet. Ein identischer Zusammenhang kann mit gleichen oder unterschiedlichen Zahlenwerten für die Richtung 28 erhalten werden.

Für alle Ausführungsformen gilt, das die realisierten Relativbewegungen von entsprechenden zusätzlichen Sensoren, wie Gyroskope u.a., erfasst werden oder von den aufgenommenen Bilddaten eines, mehrerer oder aller Kanäle abgeleitet werden können. Diese Daten oder Informationen können für den optischen und/oder elektronischen Bildstabilisator genutzt werden, das bedeutet, dass die Multiaperturabbildungsvorrichtung bspw, ausgebildet ist, um ein Sensorsignal von einem Sensor zu empfangen, und um das Sensorsignal bezüglich einer Information, die mit einer Relativbewegung zwischen der Multiaperturabbildungsvorrichtung und dem Objekt korreliert ist, auszuwerten, und um eine Ansteuerung des optischen und/oder elektronischen Bildstabilisators unter Verwendung dieser Information auszuführen.

Der optische Bildstabilisator kann ausgebildet sein, um die optische Bildstabilisierung entlang der Bildachsen 28 und 32 durch Bewegung unterschiedlicher Komponenten zu erhalten, etwa des Arrays 14 für die Stabilisierung entlang der Richtung 28 und die Rotation 38 der Strahlumlenkeinrichtung für die Stabilisierung entlang der Richtung 32. In beiden Fällen wirken sich Unterschiede in den Optiken 64a-d aus. Die vorangehenden Ausführungen bezüglich der elektronischen Bildstabilisierung können für beide Relativbewegungen implementiert werden. Insbesondere ermöglicht eine Betrachtung der Richtungen 28 und 32 getrennt voneinander eine Berücksichtigung von unterschiedlichen Abweichungen zwischen den Optiken 64a-d entlang der Richtungen 28 und 32.

Hierin beschriebene Ausführungsbeispiele können eine gemeinsame Bildachse 28 und/oder 32 für die Teilbilder in den Bildsensorbereichen 24a-d nutzen. Alternativ können sich die Richtungen auch unterscheiden und in einander umgerechnet werden.

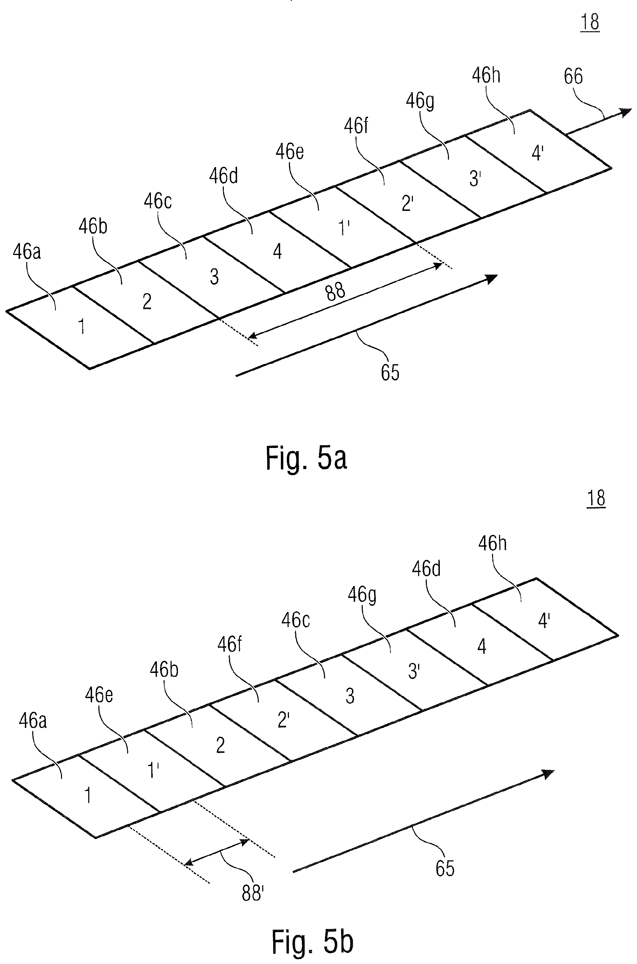

Fig. 5a zeigt eine schematische Darstellung einer Strahlumlenkeinrichtung 18, die als Array von Facetten 46a-h gebildet ist. Ist die Strahlumlenkeinrichtung 18 beispielsweise in der ersten Stellung positioniert, so können die Facetten 46a-d gekennzeichnet mit den Ziffern 1, 2, 3 bzw. 4 Strahlengänge von vier optischen Kanälen in eine erste Richtung umlenken. Weist die Strahlumlenkeinrichtung 18 die zweite Stellung auf, so kann der Strahlengang jedes optischen Kanals basierend auf den Facetten 46e-h in die zweite Richtung umgelenkt werden, wie es durch die Ziffern 1', 2', 3' bzw. 4' gekennzeichnet ist. Die Facetten 46a-d und 46e-h können bspw. als blockweise angeordnet bezeichnet werden. Für die translatorische Bewegung der Strahlumlenkeinrichtung 18 entlang der translatorischen Richtung 66 kann eine Strecke 88 zurückgelegt werden, die im Wesentlichen einer Erstreckungslänge der Anzahl der optischen Kanäle entlang der Zeilenerstreckungsrichtung 65 entspricht. Gemäß dem Ausführungsbeispiel der Fig. 4a, ist dies beispielsweise einer Ausdehnung von vier optischen Kanälen entlang der Zeilenerstreckungsrichtung 65. Gemäß einem weiteren Ausführungsbeispiel kann die Anzahl von Strahlumlenkelementen einem Vielfachen der optischen Kanäle verschieden sein. Zumindest ein Strahlumlenkelement kann in einer Stellung der Strahlumlenkeinrichtung ausgebildet oder angeordnet sein, um Strahlengänge von zumindest zwei optischen Kanälen umzulenken.

Fig. 5b zeigt eine schematische Ansicht der Strahlumlenkeinrichtung 18, bei der die Facetten 46a-g verglichen mit der Darstellung in Fig. 5a eine voneinander verschieden Sortierung aufweisen. Die in Fig. 5b dargestellte Strahlumlenkeinrichtung weist eine alternierende Anordnung der optischen Kanäle 46a-g für jeden optischen Kanal auf, wie es durch die Reihenfolge 1, 1', 2, 2', 3, 3', 4 und 4' dargestellt ist. Dies ermöglicht eine Distanz 88', entlang der die Strahlumlenkeinrichtung 18 bewegt wird, um zwischen der ersten Position und der zweiten Position umgeschaltet zu werden. Die Distanz 88' kann verglichen mit der Distanz 88 aus Fig. 5a gering sein. Beispielsweise kann die Distanz 88' im Wesentlichen dem Abstand zwischen zwei benachbarten optischen Kanälen des Arrays 14 entsprechen. Zwei optische Kanäle können bspw. einen Abstand oder einen Zwischenraum zueinander aufweisen, der im Wesentlichen zumindest einer Abmessung einer Facette entlang der Bewegungsrichtung 65 entspricht. Die Distanz 88' kann auch hiervon verscheiden sein, bspw. wenn ein Strahlumlenkelement in einer Stellung der Strahlumlenkeinrichtung ausgebildet oder angeordnet ist, um Strahlengänge von zumindest zwei optischen Kanälen umzulenken.

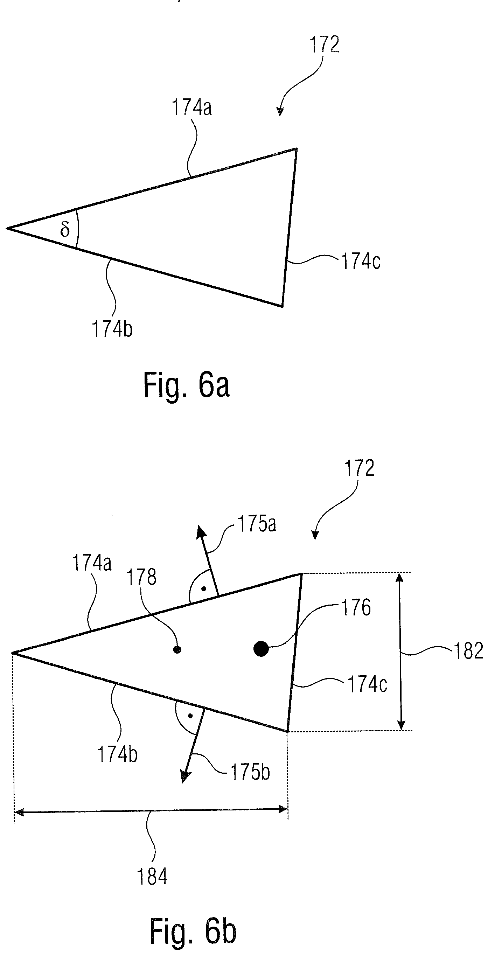

Anhand der Fig. 6a-f werden vorteilhafte Ausgestaltungen der Strahlumlenkeinrichtung 18 beschrieben. Die Ausführungen zeigen eine Reihe von Vorteilen auf, die einzeln oder in beliebiger Kombination miteinander ausführbar sind, jedoch nicht einschränkend wirken sollen.

Fig. 6a zeigt eine schematische Seitenschnittansicht eines Strahlumlenkelements 172, das in hierin beschriebenen Strahlumlenkeinrichtungen als einer der Strahlumlenkbereiche 46 einsetzbar ist. Das Strahlumlenkelement 172 kann für einen, eine Mehrzahl oder alle der optischen Kanäle 16a-d wirksam sein und einen polygonzugartigen Querschnitt aufweisen. Obwohl ein dreieckiger Querschnitt gezeigt ist, kann es sich auch um ein beliebiges anderes Polygon handeln. Alternativ oder zusätzlich kann der Querschnitt auch zumindest eine gekrümmte Oberfläche aufweisen, wobei ins-besondere bei reflektierenden Oberflächen eine zumindest abschnittsweise ebene Ausbildung vorteilhaft sein kann, um Abbildungsfehler zu vermeiden. Die beiden Hauptseiten 174a und 174b können um einen Winkel δ zueinander geneigt sein. Der Winkel δ kann einen Wert zwischen 1° und 89° aufweisen, weist bevorzugt einen Wert zwischen 5° und 60° und besonders bevorzugt einen Wert zwischen 10° und 30° auf. Die Hauptseiten 174a und 174b sind also bevorzugt in einem Winkel von höchstens 60° geneigt zu einander angeordnet.

Das Strahlumlenkelement 172 weist bspw. eine erste Seite 174a, eine zweite Seite 174b und eine dritte Seite 174c auf. Zumindest zwei Seiten, etwa die Seiten 174a und 174b sind reflektiv ausgebildet, so dass das Strahlumlenkelement 172 beidseitig reflektiv ausgebildet ist. Bei den Seiten 174a und 174b kann es sich um Hauptseiten des Strahlumlenkelements 172 handeln, also Seiten, deren Fläche größer ist, als die Seite 174c.

In anderen Worten kann das Strahlumlenkelement 172 keilförmig und beidseitig reflektiv gebildet sein. Der Fläche 174c gegenüberliegend, also zwischen den Flächen 174a und 174b, kann eine weitere Fläche angeordnet sein, die jedoch wesentlich kleiner als die Fläche 174c ist. Mit anderen Worten verläuft der durch die Flächen 174a, 174b und 174c gebildete Keil nicht beliebig spitz zu, sondern ist an der spitzen Seite mit einer Fläche versehen und mithin abgestumpft.

Fig. 6b zeigt eine schematische Seitenschnittansicht des Strahlumlenkelements 172, bei dem eine Aufhängung oder eine Verschiebeachse 176 des Strahlumlenkelements 172 beschrieben ist. Die Verschiebeachse 176, um die das Strahlumlenkelement 172 rotatorisch und/oder translatorisch in der Strahlumlenkeinrichtung 18 bewegbar sein kann, kann ex-zentrisch bezüglich eines Flächenschwerpunktes 178 des Querschnitts verschoben sein. Der Flächenschwerpunkt kann alternativ auch ein Punkt sein, der die hälftige Abmessung des Strahlumlenkelements 172 entlang einer Dickenrichtung 182 und entlang einer Richtung 184 senkrecht hierzu beschreibt.

Die Hauptseite 174a kann eine Oberflächennormale 175a aufweisen, während die Hauptseite 174b eine Oberflächennormale 175b aufweisen kann. Wird eine rotatorische Bewegung um die Verschiebeachse 176 genutzt, um zwischen der ersten Stellung und der zweiten Stellung der Strahlumlenkeinrichtung umzuschalten, so kann die rotatorische Bewegung der Strahlumlenkeinrichtung so ausgeführt werden, dass zwischen den beiden Stellungen eine Orientierung gemäß derer eine Hauptseiten 174a oder 174b dem Array 14 vollständig zugewandt ist, vermieden ist, wie es im Zusammenhang mit Fig. 2b beschrieben ist. Dies kann auch so verstanden werden, dass während eines Wechsels zwischen dem ersten und dem zweiten Betriebszustand oder Stellung durch die rotatorische Bewegung die Oberflächennormale 175a und die Oberflächennormale 175b der zweiten Hauptseite zu jedem Zeitpunkt einen in Fig. 2b als Winkel $\gamma_1$ und $\gamma_2$ bezeichneten Winkel von zumindest 10° bezogen auf eine Richtung hin zu dem Bildsensor und ggf. parallel zu einer Oberflächennormalen des Bildsensors aufweisen. So kann vermieden werden, dass einer der Winkel 0° oder 180° beträgt, was eine hohe oder näherungsweise maximale Ausdehnung der Strahlumlenkeinrichtung entlang der Dickenrichtung bedeuten kann.

Die Verschiebeachse 176 kann bspw. entlang einer Dickenrichtung 182 unverändert und einen beliebigen Versatz in einer Richtung senkrecht hierzu aufweisen. Alternativ ist auch ein Versatz entlang der Dickenrichtung 182 vorstellbar. Die Verschiebung kann bspw. so erfolgen, dass bei einer Rotation des Strahlumlenkelements 172 um die Verschiebeachse 176 ein höherer Stellweg erhalten wird, als bei einer Rotation um den Flächenschwerpunkt 178. So kann sich durch die Verschiebung der Verschiebeachse 176 der Weg, um den die Kante zwischen den Seiten 174a und 174b bei einer Rotation bewegt wird bei gleichem Rotationswinkel verglichen mit einer Rotation um den Flächenschwerpunkt 178 erhöhen. Bevorzugt ist das Strahlumlenkelement 172 so angeordnet, dass die Kante, also die spitze Seite des keilförmigen Querschnitts, zwischen den Seiten 174a und 174b dem Bildsensor zugewandt ist. Durch geringe Rotationsbewegungen kann somit eine jeweils andere Seite 174a oder 174b den Strahlengang der optischen Kanäle umlenken. Hierbei wird deutlich, dass die Rotation so ausgeführt werden kann, dass ein Raumbedarf der Strahlumlenkeinrichtung entlang der Dickenrichtung 182 gering ist, da eine Bewegung des Strahlumlenkelements 172 so, dass eine Hauptseite senkrecht zum Bildsensor steht, nicht erforderlich ist.

Die Seite 174c kann auch als Nebenseite oder als Rückseite bezeichnet werden. Mehrere Strahlumlenkelemente können so miteinander verbunden werden, dass ein verbindendes Element an der Seite 174c angeordnet ist, oder durch den Querschnitt der Strahlumlenkelemente verläuft, also im Inneren der Strahlumlenkelemente angeordnet ist, etwa im Bereich der Verschiebeachse 176. Insbesondere kann das haltende Element so angeordnet sein, dass es nicht oder lediglich in geringem Umfang, d. h., höchstens 50 %, höchstens 30 % oder höchstens 10 % über das Strahlumlenkelement 172 entlang der Richtung 182 hinausragt, so dass das Halteelement nicht die Ausdehnung des Gesamtaufbaus entlang der Richtung 182 erhöht oder bestimmt. Die Ausdehnung in Dickenrichtung 182 kann alternativ durch die Linsen der optischen Kanäle bestimmt sein, d. h. diese weisen die das Minimum der Dicke definierende Abmessung auf.

Das Strahlumlenkelement 172 kann aus Glas, Keramik, Glaskeramik, Kunststoff, Metall oder einer Kombination dieser Materialien und /oder weiterer Materialien gebildet sein.

In anderen Worten kann das Strahlumlenkelement 172 so angeordnet sein, dass die Spitze, d. h., die Kante zwischen den Hauptseiten 174a und 174b zum Bildsensor zeigt. Eine Haltung der Strahlumlenkelemente kann so erfolgen, dass sie lediglich an der Rückseite oder im Inneren der Strahlumlenkelemente erfolgt, d. h. die Hauptseiten werden nicht verdeckt. Ein gemeinsames haltendes oder verbindendes Element kann sich über die Rückseite 174c erstrecken. Die Drehachse des Strahlumlenkelements 172 kann exzentrisch angeordnet sein.

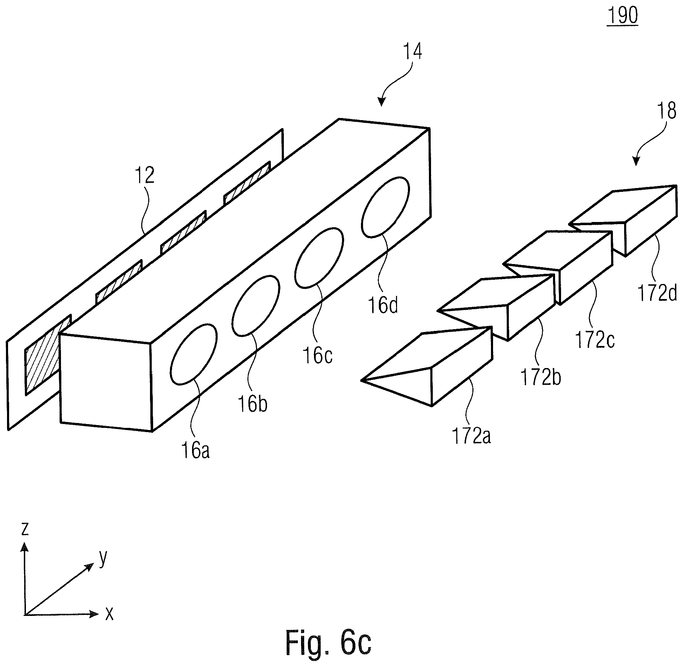

Fig. 6c zeigt eine schematische perspektivische Ansicht einer Multiaperturabbildungsvorrichtung 190, die einen Bildsensor 12, und ein einzeiliges Array 14 von nebeneinander angeordneten optischen Kanälen 16a-d umfasst. Die Strahlumlenkeinrichtung 18 umfasst eine Anzahl von Strahlumlenkelementen 172a-d, die der Anzahl von optischen Kanälen entsprechen kann. Alternativ kann eine geringere Anzahl von Strahlumlenkelementen angeordnet sein, etwa wenn zumindest ein Strahlumlenkelement von zwei optischen Kanälen genutzt wird. Alternativ kann auch eine höhere Anzahl angeordnet sein, etwa wenn eine Umschaltung der Umlenkrichtung der Strahlumlenkeinrichtung 18 durch eine translatorische Bewegung erfolgt, wie es im Zusammenhang mit den Fig. 5a und 5b beschrieben ist. Jedes Strahlumlenkelement 172a-d kann einem optischen Kanal 16a-d zugeordnet sein. Die Strahlumlenkelemente 172a-d können als eine Vielzahl von Elementen 172 gebildet sein. Alternativ können zumindest zwei, mehrere oder alle Strahlumlenkelemente 172a-d einstückig mit einander gebildet sein.

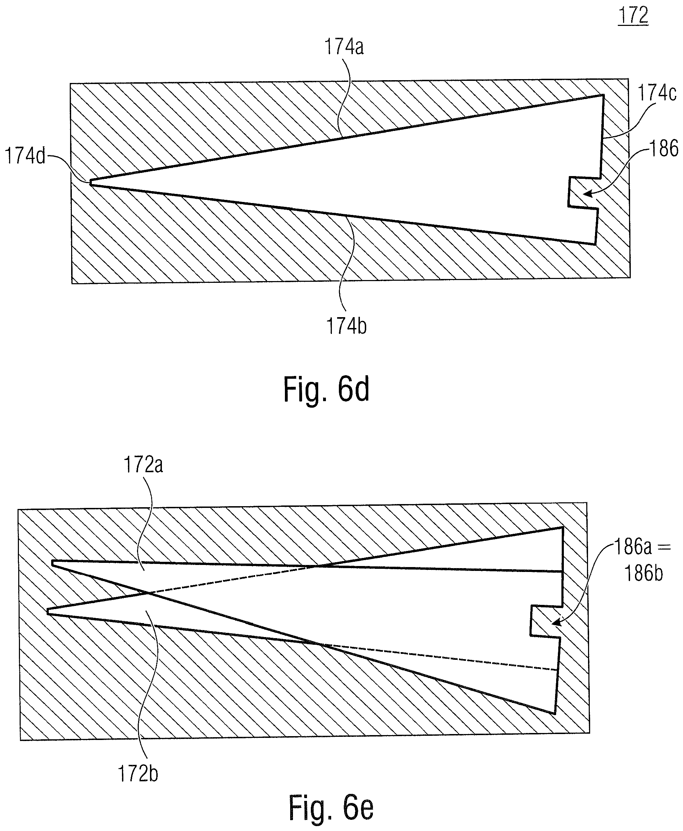

Fig. 6d zeigt eine schematische Seitenschnittansicht des Strahlumlenkelements 172, dessen Querschnitt das als Freiformfläche gebildet ist. So kann die Seite 174c eine Aussparung 186 aufweisen, die eine Befestigung eines haltenden Elements ermöglicht, wobei die Aussparung 186 auch als hervorstehendes Element, etwa als Feder eines Nut-FederSystems gebildet sein kann. Der Querschnitt weist ferner eine vierte Seite 174d auf, die eine geringere Flächenausdehnung als die Hauptseiten 174a und 174b aufweist und selbige mit einander verbindet.

Fig. 6e zeigt eine schematische Seitenschnittansicht eines ersten Strahlumlenkelements 172a und eines in Darstellungsrichtung dahinterliegenden zweiten Strahlumlenkelements 172b. Die Aussparungen 186a und 186b können dabei so angeordnet sein, dass sie im Wesentlichen deckungsgleich sind, so dass eine Anordnung eines verbindenden Elements in den Aussparungen ermöglicht ist.

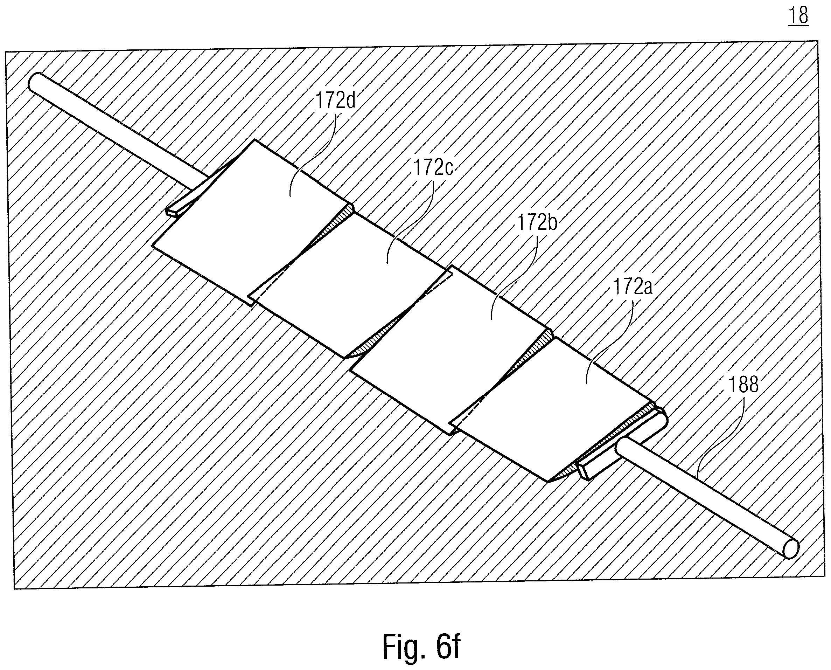

Fig. 6f zeigt eine schematische perspektivische Ansicht der Strahlumlenkeinrichtung 18, die bspw. vier Strahlumlenkelements 172a-d umfasst, die mit einem verbindenden Element 188 verbunden sind. Das verbindende Element kann nutzbar sein, um von einem Aktor translatorisch und/oder rotatorisch bewegbar zu sein. Das verbindende Element 188 kann einstückig ausgebildet sein und über eine Erstreckungsrichtung, etwa die y-Richtung, an oder in den Strahlumlenkelementen 172a-d verlaufen. Alternativ kann das verbindende Element 188 auch lediglich mit zumindest einer Seite der Strahlumlenkeinrichtung 18 verbunden sein, etwa wenn die Strahlumlenkelemente 172a-d einstückig gebildet sind. Alternativ kann eine Verbindung mit einem Aktor und/oder eine Verbindung der Strahlumlenkelemente 172a-d auch auf beliebige andere Weise erfolgen, etwa mittels Kleben, Ansprengen oder Löten.

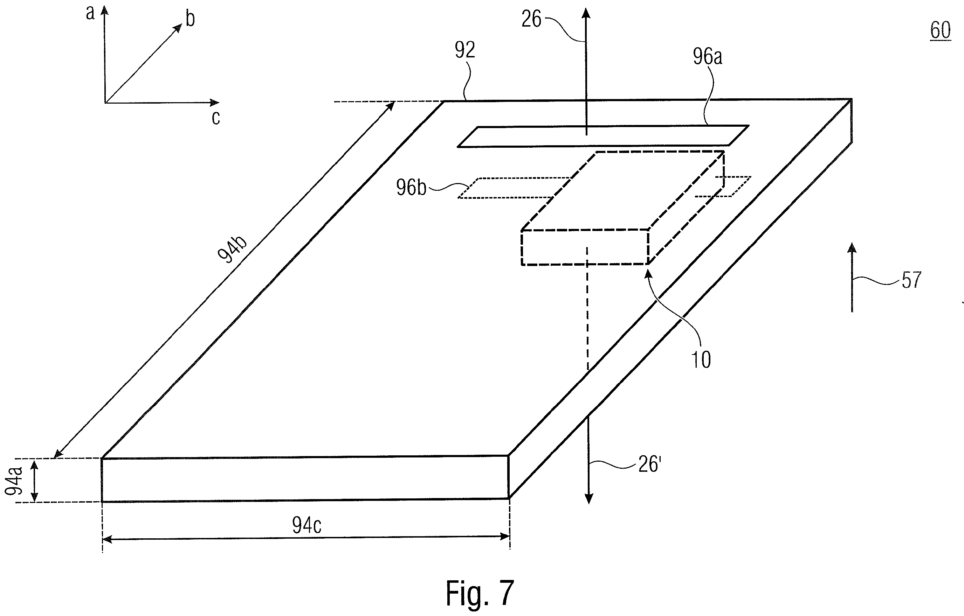

Fig. 7 zeigt eine schematische perspektivische Darstellung eines Abbildungssystems 60 gemäß einem Ausführungsbeispiel. Das Abbildungssystem 60 umfasst die Multiaperturabbildungsvorrichtung 10. Gemäß weiteren Ausführungsbeispielen umfasst das Abbildungssystem 60 alternativ oder zusätzlich zu der Multiaperturabbildungsvorrichtung 10 zumindest eine Multiaperturabbildungsvorrichtung 10', 20, 30 40. Das Abbildungssystem 60 umfasst ein flaches Gehäuse 92. Das flache Gehäuse 92 umfasst eine erste Ausdehnung 94a entlang einer ersten Gehäuserichtung a. Das flache Gehäuse 92 umfasst ferner eine zweite Ausdehnung 94b entlang einer zweiten Gehäuserichtung b und eine dritte Ausdehnung 94c entlang einer dritten Gehäuserichtung c. Beispielsweise kann die Gehäuserichtung a parallel zu der Dickenrichtung 57 im Raum angeordnet sein. Die Ausdehnung 94a des flachen Gehäuses 92 entlang der Gehäuserichtung a kann als kleinste Abmessung des flachen Gehäuses 92 verstanden werden. Verglichen mit der kleinsten Ausdehnung können andere Ausdehnungen 94b und/oder 94c entlang anderer Gehäuserichtungen b bzw. c zumindest einen dreifachen Wert, zumindest einen fünffachen Wert oder zumindest einen siebenfachen Wert verglichen mit der Ausdehnung 94a entlang der Gehäuserichtung a aufweisen. Vereinfacht ausgedrückt kann die Ausdehnung 94a kleiner, wesentlich kleiner oder ggf. um eine Größenordnung kleiner sein als andere Ausdehnungen 94b und 94c entlang anderer Gehäuserichtungen b bzw. c.

Das flache Gehäuse 92 kann eine oder mehrere Blenden 96a-b umfassten, durch die der Strahlengang 26 und/oder 26' hindurch umlenkbar ist, beispielsweise basierend auf der Strahlumlenkeinrichtung der Multiaperturabbildungsvorrichtung 10. Die Blenden können bspw. elektrochrome Blenden sein und/oder in einem Bereich der Anzeige angeordnet sein.

Das Abbildungssystem 60 kann als tragbare Vorrichtung ausgebildet sein. Beispielsweise kann das Abbildungssystem 60 eine tragbare Kommunikationseinrichtung, wie etwa ein Mobiltelefon oder ein sogenanntes Smartphone, ein Tablet-Computer oder ein tragbares Musikabspielgerät sein. Das Abbildungssystem 60 kann als Monitor, etwa zur Verwendung in einem Navigations-, Multimedia- oder Televisionssystem implementiert sein. Alternativ oder zusätzlich kann das Abbildungssystem 60 auch hinter reflektierenden Oberflächen, wie etwa einem Spiegel, angeordnet sein.

Im Bereich mobiler Kommunikationsgeräte kann eine Anordnung einer Multiaperturabbildungsvorrichtung 10, 10', 20, 30 und/oder 40 vorteilhaft sein, da basierend auf der Anordnung der Komponenten entlang der langen Gehäuseseiten 94b und/oder 94c eine Ausdehnung der Multiaperturabbildungsvorrichtung entlang der Gehäuserichtung 94a gering sein kann, so dass das Abbildungssystem 60 eine geringe Ausdehnung 94a aufweisen kann. In anderen Worten kann eine relative, zweidimensionale laterale Bewegung von Bildsensor und Objektiv, die in konventionellen Systemen eine zweidimensionale Winkeländerung des Gesichtsfeldes (entspricht einem Scannen) bewirken, durch eine eindimensionale Änderung der Blickrichtung und eine Rotationsbewegung ersetzt werden. Eine eindimensionale Änderung der Blickrichtung kann durch Änderung der Ausrichtung des Spiegels (Strahlumlenkeinrichtung) bezüglich der optischen Achse (Zeilenerstreckungsrichtung) der Abbildungskanäle erfolgen, indem der drehbar gelagerte Spiegel in eine andere Orientierung gebracht wird, wobei die Drehachse des Spiegels senkrecht bzw. nahezu senkrecht zu den optischen Achsen der Abbildungskanäle verlaufen kann. Zur Anpassung der Blickrichtung senkrecht zu der zuvor beschriebenen Richtung können Bildsensor und/oder Arrayobjektiv (Array der optischen Kanäle) lateral zueinander bewegt werden. Im Zusammenspiel beider Bewegungen kann eine zweidimensionale optische Bildstabilisierung erzielt werden.

Um eine geringe Bauhöhe zu ermöglichen, können die zur Realisierung der Bewegung angeordneten Komponenten (beispielsweise Aktoren) und Subsysteme wie etwa eine Bildverarbeitung, ggf. ausschließlich neben, vor und/oder hinter dem durch den Abbildungsstrahlengang definierten Bauraum angeordnet sein, d.h., zwischen den Ebenen 52a und 52b angeordnet sein, und gemäß Ausführungsbeispielen nicht darüber oder darunter. Dies ermöglicht eine räumliche Trennung von Bewegungseinheiten (Aktoren) für die optische Bildstabilisierung, Hierdurch kann eine Verringerung der Anzahl erforderlicher Komponenten erhalten werden und somit ein Herstellungspreis von Kamerasystemen gering sein sowie eine deutliche Verringerung der Bauhöhe verglichen mit konventionellen Aufbauten erzielt werden. Unter Bezugnahme auf Fig. 2a kann ein Unterschied zu bekannten Systemen darin liegen, dass die Linsen (Optiken) der optischen Kanäle den Abstand der Ebenen 52a und 52b im Wesentlichen definieren können. Dies ermöglicht eine geringe Bauhöhe der Vorrichtung, was vorteilhaft ist. In konventionellen Systemen ist eine Hauptebene der Linsen parallel zu den Ebenen 52a und 52b, wohingegen die Hauptebene der Optiken des Arrays orthogonal hierzu angeordnet ist.

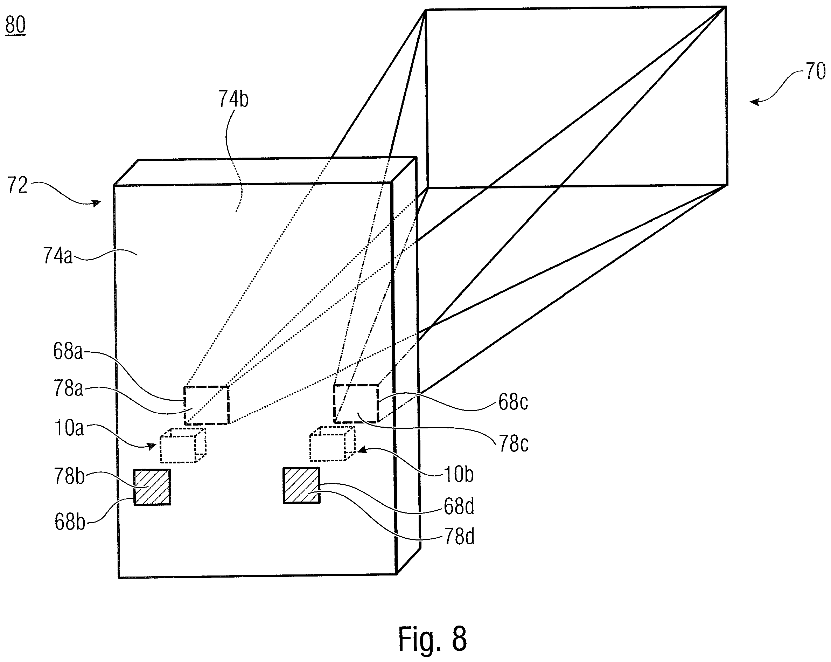

Fig. 8 zeigt eine schematische perspektivische Ansicht einer Vorrichtung 80, die ein Gehäuse 72 und eine erste Multiaperturabbildungsvorrichtung 10a und eine zweite in dem Gehäuse 72 angeordnete Multiaperturabbildungsvorrichtung 10b umfasst. Die Vorrichtung 80 ist ausgebildet, um das Gesamtgesichtsfeld 70 zumindest teilweise, etwa im Überlappbereich der Erfassungsbereiche, stereoskopisch mit den Multiaperturabbildungsvorrichtungen zu erfassen. Das Gesamtgesichtsfeld 70 ist bspw. an einer der Hauptseite 74a abgewandten Hauptseite 74b des Gehäuses angeordnet. Beispielsweise können die Multiaperturabbildungsvorrichtungen 10a und 10b das Gesamtgesichtsfeld 70 durch transparente Bereiche 68a bzw. 68c erfassen, wobei in der Hauptseite 74b angeordnete Blenden 78a und 78c zumindest teilweise transparent sind. In der Hauptseite 74a angeordnete Blenden 78b und 78d können transparenten Bereiche 68b bzw. 68d zumindest teilweise optisch verschließen, so dass ein Umfang von Falschlicht aus einer der Hauptseite 74a zugewandten Seite, das die Aufnahmen der Multiaperturabbildungsvorrichtungen 10a und/oder 10b verfälschen kann, zumindest reduziert ist. Obwohl die Multiaperturabbildungsvorrichtungen 10a und 10b räumlich von einander beabstandet angeordnet dargestellt sind, können die Multiaperturabbildungsvorrichtungen 10a und 10b auch räumlich benachbart oder kombiniert angeordnet sein. Bspw. können die einzeiligen Arrays der Abbildungsvorrichtungen 10a und 10b nebeneinander oder parallel zu einander angeordnet sein. Die einzeiligen Arrays können Zeilen zueinander bilden, wobei jede Multiaperturabbildungsvorrichtung 10a und 10b ein einzeiliges Array aufweist. Die Abbildungsvorrichtungen 10a und 10b können eine gemeinsame Strahlumlenkeinrichtung, und/oder einen gemeinsamen Träger 62 und/oder einen gemeinsamen Bildsensor 12 aufweisen. Alternativ oder zusätzlich zu der Multiaperturabbildungsvorrichtung 10a und/oder 10b kann zumindest die Multiaperturabbildungsvorrichtung 10, 10', 20, 30 und/oder 40 angeordnet sein. Derartige gemeinsame Elemente, etwa die Strahlumlenkeinrichtung oder das Array können von einem gemeinsamen optischen Bildstabilisator genutzt werden, da bspw. eine Bewegung der Strahlumlenkeinrichtung für optische Kanäle mehrerer Module wirken als optische Bildstabilisierung wirken kann. Dementsprechend kann auch der optische Bildstabilisator für mehrere Module gemeinsam ausgeführt sein und/oder ein gemeinsamer Referenzkanal für mehrere Module genutzt werden.

Die transparenten Bereiche 68a-d können zusätzlich mit einer schaltbaren Blende 78a-d ausgestattet sein, die den optischen Aufbau für den Fall der Nicht-Benutzung abdeckt. Die Blende 78a-d kann ein mechanisch bewegtes Teil umfassen. Die Bewegung des mechanisch bewegten Teils kann unter Nutzung eines Aktors erfolgen, wie es beispielsweise für die Aktoren 36 und 45 beschrieben ist. Die Blende 78a-d kann alternativ oder zusätzlich elektrisch steuerbar sein und eine elektrochrome Schicht oder eine elektrochrome Schichtfolge umfassen, d. h., als elektrochrome Blende gebildet sein.

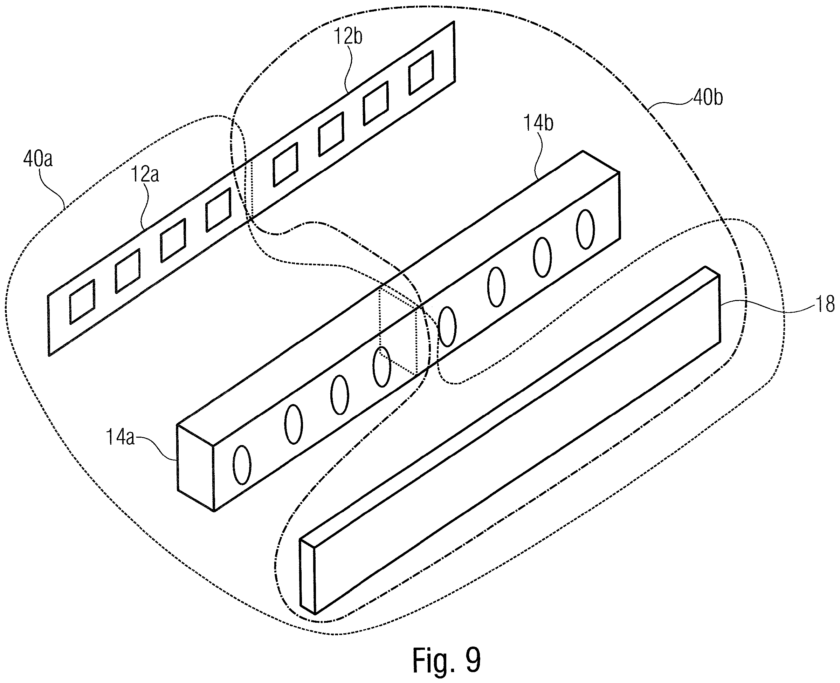

Fig. 9 zeigt einen schematischen Aufbau umfassend eine erste Multiaperturabbildungsvorrichtung 10a und eine zweite Multiaperturabbildungsvorrichtung 10b, wie er bspw. in dem Abbildungssystem 80 angeordnet sein kann. Die Arrays 14a und 14b sind einzeilig gebildet und bilden eine gemeinsame Zeile. Die Bildsensoren 12a und 12b können auf einem gemeinsamen Substrat bzw. auf einem gemeinsamen Schaltungsträger wie einer gemeinsamen Platine oder einem gemeinsamen Flexboard montiert sein. Alternativ können die Bildsensoren 12a und 12b auch von einander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlurnlenkeinrichtung 18 sowie weitere Multiaperturabbildungsvorrichtungen, die separate Komponenten aufweisen. Vorteilhaft an einem gemeinsamen Bildsensor, einem gemeinsamen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch andere und/oder von einander verschiedene Multiaperturabbildungsvorrichtungen 10, 10', 20, 30 und/oder 40 ein gemeinsames Array, einen gemeinsamen Bildsensor und/oder eine gemeinsame Strahlumlenkeinrichtung aufweisen.

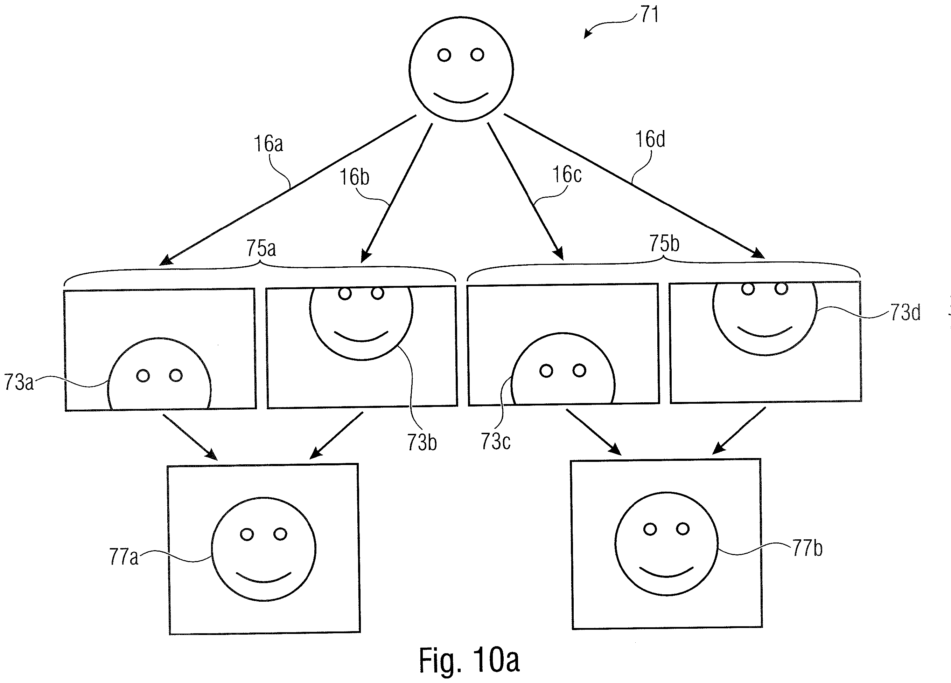

Fig. 10a ist eine schematische Darstellung einer Ausgangssituation einer Ausführungsform der elektronischen Bildstabilisierung, wie sie etwa durch hierin beschriebene Abbildungssysteme erzielt werden kann, wobei die Ausführungen im Hinblick auf die elektronische Bildstabilisierung ohne Einschränkungen auch auf einzelne Multiaperturabbildungsvorrichtungen bezogen werden können. In dem beschriebenen Ausführungsbeispiel nutzt das Abbildungssystem einen gemeinsamen optischen Bildstabilisator und einen gemeinsamen elektronischen Bildstabilisator. Beispielhaft weist jedes Modul zwei optische Kanäle 16a und 16b bzw. 16c und 16d auf, um das Gesamtgesichtsfeld mit einem Objekt 71 abzubilden. Ohne einschränkende Wirkung werden die Abbildungen 73a und 73b der optischen Kanäle 16a und 16b in die zugehörigen Bildsensorbereiche als linke Abbildung 75a und Abbildungen 73c und 73d der optischen Kanäle 16c und 16d als rechte Abbildung einer stereoskopen Erfassung des Objekts 71 bezeichnet.

Fig. 10a zeigt nun einen fehlerfreien Zustand, in welchem das Objekt 71 auf die Bildsensorbereiche abgebildet wird, um die Abbildungen 73a-d zu erhalten. Die Abbilder 73a und 73b können von der Multiaperturabbildungsvorrichtung zu einem linken Gesamtbild 77a kombiniert werden, etwa mittels Stitching. Die Abbilder 73c und 73d können in vergleichbarer Weise von der Multiaperturabbildungsvorrichtung zu einem rechten Gesamtbild 77b kombiniert werden, so dass durch die beiden Gesamtbilder 75a und 75b stereoskope Informationen bezüglich des Objekts 71 ermittelbar sind.

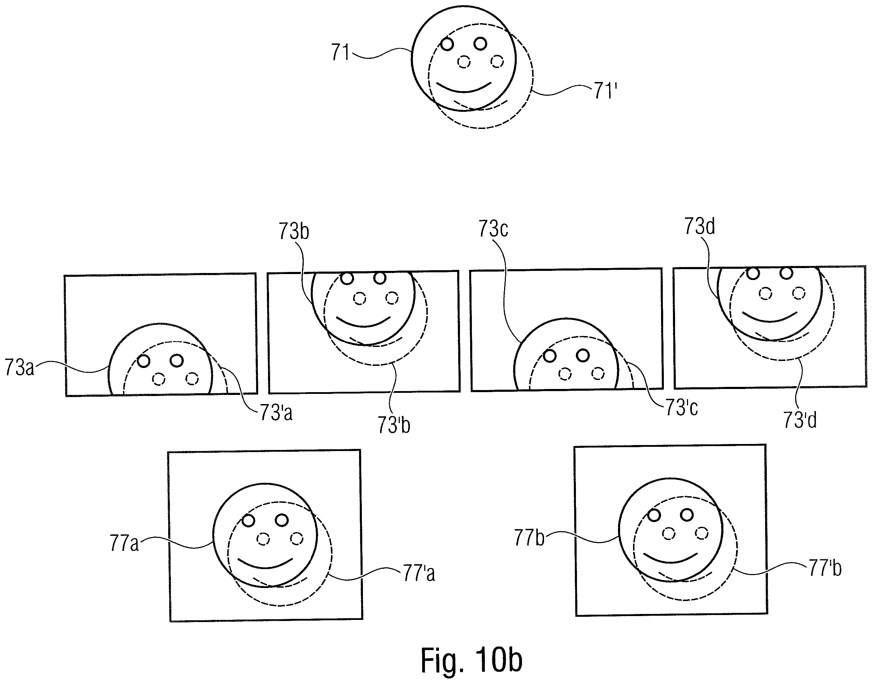

Fig. 10b zeigt nun den Fall aus Fig. 10a, bei dem eine Relativbewegung des Abbildungssystems gegenüber dem Objekt 71 zu einer durch das Objekt 71' dargestellten veränderten Relativposition des Objekts 71 gegenüber dem Abbildungssystem führt. Hierbei kann es sich bspw. um eine Bewegung des Objekts 71 und/oder um ein Verwackeln des Abbildungssystems handeln. Die Relativbewegung führt nun bei Vernachlässigung von Bildkorrekturen zu einer veränderten Bildlage der Abbildung des Objekts 71 in den Bildsensorbereichen, was durch die gestrichelten Linien der Abbildungen 73'a-d dargestellt ist.

Angestrebt wird nun ein Erhalt von Bildern 77a und 77b, die in Fig. 10a dargestellt sind, also fehlerkompensierte Bilder. Angestrebt ist eine Kompensation der Verwacklung, also eine optimale Bildstabilisierung. In dieser Betrachtung sind Abweichungen in den Optiken der optischen Kanäle unberücksichtigt.

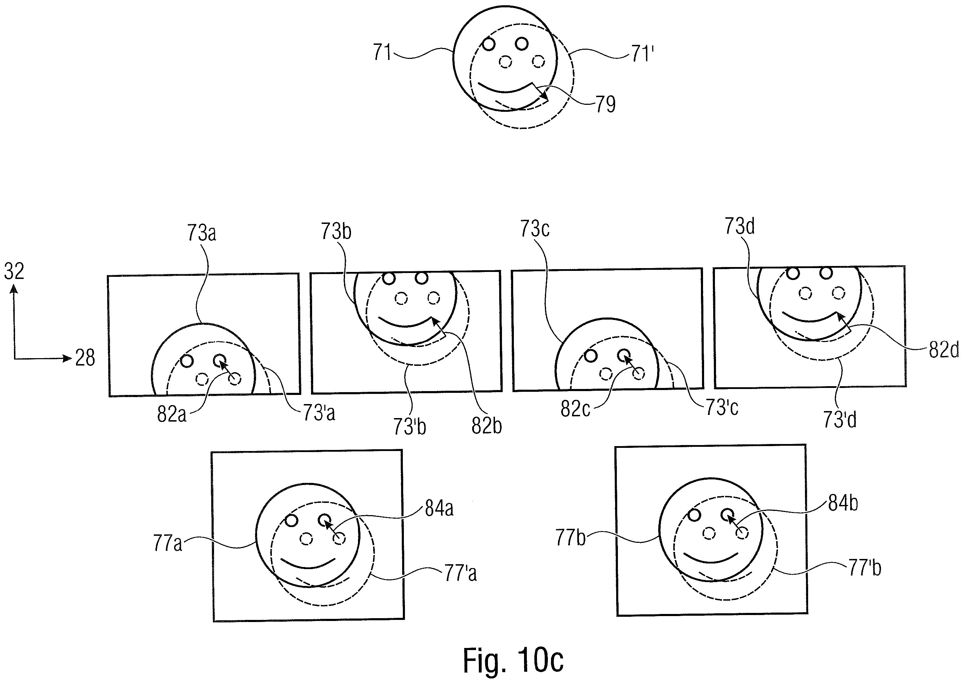

Fig. 10c zeigt die Grundlagen für die optische Bildstabilisierung in den Bildern unter der unveränderten Annahme, dass eine reine optische Bildstabilisierung aller optischen Kanäle optimale, die identische optische Parameter aufweisen also eine identische Brennweite aufweisen, zu einer optimalen Bildstabilisierung führen. Die Verschiebung des Objekts 71 ist durch einen Pfeil 79 dargestellt, der in positive Richtung 28 und negative Richtung 32 weist. Durch Erzeugen der Relativbewegung zwischen dem Bildsensor, dem Array und der Strahlumlenkeinrichtung durch den optischen Bildstabilisator wird erreicht, dass die Abbildungen 73'a-d und mithin die Gesamtbilder 77a und 77b entlang entgegengesetzter Richtungen 82a-d bzw. 84a-b verschoben werden, wobei im Betriebsfall sowohl die Verschiebung des Objekts gemäß Fig. 10b als auch die Kompensation Fig. 10c so zeitnah wie möglich erfolgen, um den dargestellten Versatz gar nicht erst entstehen zu lassen. Die durch Pfeile 84a-d und 77a-b repräsentierten Richtungen sind dem Pfeil 79 entgegengesetzt im Raum angeordnet, bspw. an markanten Punkten im jeweiligen Teilbild, etwa einem Auge der Mundwinkel, was bspw. Kanten im Bild bedeutet.

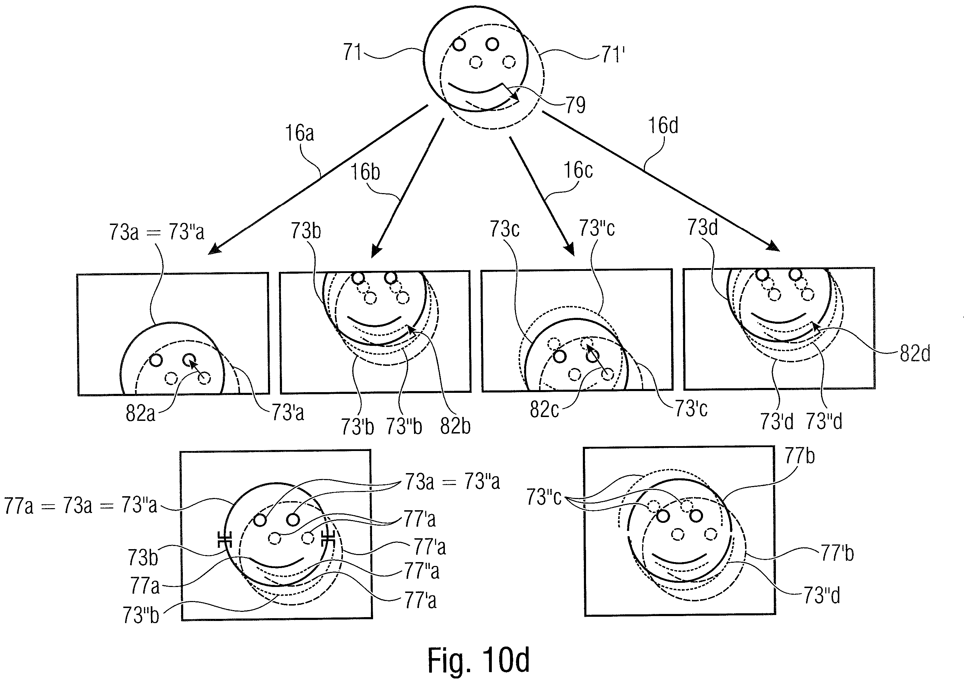

In Fig. 10d sind nun erhaltene Teilbilder 73"a-d nach der optischen Bildstabilisierung und unter Berücksichtigung der tatsächlichen Abweichungen in den optischen Eigenschaften dargestellt. Die optische Bildstabilisierung wird bspw. so ausgeführt, dass das Abbild 73a optimal korrigiert ist, das bedeutet, das optisch bildstabilisierte Abbild 73"a entspricht dem fehlerfreien Abbild 73a, zumindest innerhalb eines Toleranzbereichs, der die Möglichkeiten des optischen Bildstabilisators angibt.

Durch die Abweichungen in den optischen Eigenschaften wirkt sich die Bildstabilisierung in dem optischen Kanal 16a nun in den Kanälen 16b-d unterschiedlich aus, das bedeutet, die Abweichungen in den optischen Eigenschaften bewirken bspw., dass die Pfeile 82a-d, die die Verschiebung der Abbildungen basierend auf der optischen Stabilisierung angibt, in ihrer Länge und/oder Richtung unterschiedlich sein können.

Dies macht sich in den zusammengefügten Bildern 77 bemerkbar, die aus den korrigierten Bildern 73"a und 73"b bzw. 73"c und 73"d gebildet werden. Die Divergenz in der Zurückverschiebung durch die optische Bildstabilisierung führt zu einem Auseinanderfallen der Teilbilder, was beim Stitching Fehler verursachen kann. Dies ist bspw. durch die getrennten Teilbilder 73"c und 73"d im Zusammenhang mit dem Gesamtbild 77b dargestellt, oder durch das von dem Teilbild 73"a, das korrekt stabilisiert ist, beabstandete Teilbild 73"b im Gesamtbild 77a. In anderen Worten kommt es zu Fehlern bei der Bildzusammensetzung, da eine nicht vollständig kompensierte Bildlage in allen Kanälen existiert.

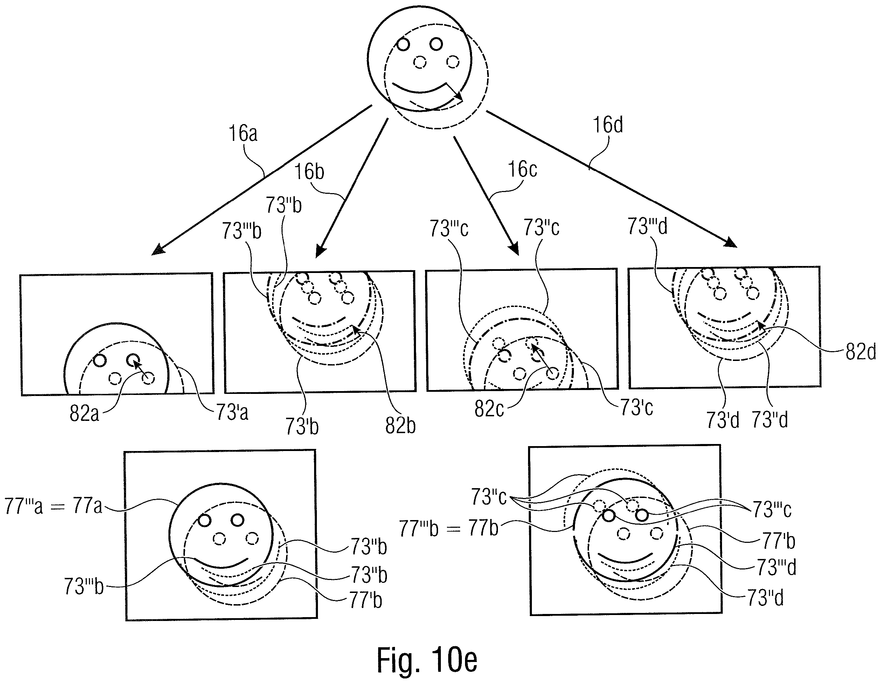

Fig. 10e zeigt in den Abbildungen der Kanäle 16b-c die nun gegenüber dem Referenzkanal 16a durchgeführte optische Bildstabilisierung, die durch die Bilder 73‴b-d angedeutet ist. Durch elektronische Bildstabilisierung in den Kanälen 16b-d abseits des Kanals 16a werden deren Abweichungen gegenüber der optischen Bildstabilisierung im optischen Kanal 16a zumindest teilweise kompensiert, so dass fehlerreduzierte oder gar fehlerfreie Bilder 77‴a und 77‴b erhalten werden können, die den Bildern 77a bzw. 77b entsprechen können. Das bedeutet, es werden teilkompensierte Bildlagen durch optische Bildstabilisierung und kompensierte Bildlagen durch zusätzliche elektronische Bildstabilisierung erhalten. Das Ausmaß der elektronische Bildstabilisierung kann durch den elektronische Bildstabilisator unter Verwendung des funktionellen Zusammenhangs zwischen den optischen Kanälen 16a-d erfolgen. Alternativ oder zusätzlich kann der elektronische Bildstabilisator, etwa der Bildstabilisator 41, ausgebildet sein, um das Ausmaß der Verschiebung in den Abbildungen zu bestimmen, etwa durch Betrachtung eines übereinstimmenden Merkmals in zwei zeitlich von einander verschiedenen oder aufeinanderfolgenden Frames.

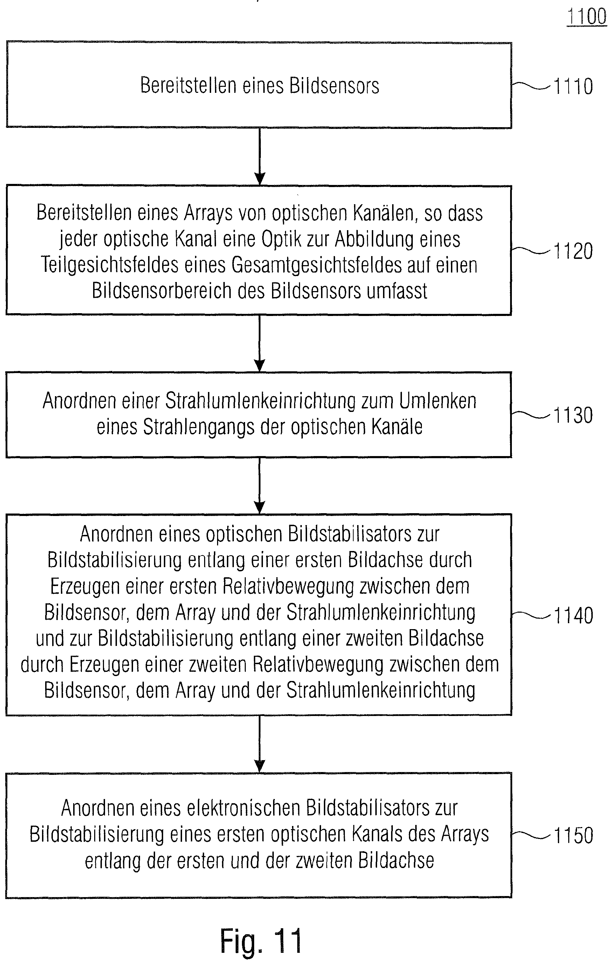

Fig. 11 zeigt ein schematisches Ablaufdiagramm eines Verfahrens 1100 zum Bereitstellen einer Multiaperturabbildungsvorrichtung. In einem Schritt 1110 erfolgt ein Bereitstellen eines Bildsensors. In einem Schritt 1120 erfolgt ein Bereitstellen eines Arrays von optischen Kanälen, so dass jeder optische Kanal eine Optik zur Abbildung eines Teilgesichtsfeldes eines Gesamtgesichtsfeldes auf einen Bildsensorbereich des Bildsensors umfasst. In einem Schritt 1130 erfolgt ein Anordnen einer Strahlumlenkeinrichtung zum Umlenken eines Strahlengangs der optischen Kanäle. In einem Schritt 1140 erfolgt ein Anordnen eines optischen Bildstabilisators zur Bildstabilisierung entlang einer ersten Bildachse durch Erzeugen einer ersten Relativbewegung zwischen dem Bildsensor, dem Array und der Strahlumlenkeinrichtung und zur Bildstabilisierung entlang einer zweiten Bildachse durch Erzeugen einer zweiten Relativbewegung zwischen dem Bildsensor, dem Array und der Strahlumlenkeinrichtung. In einem Schritt 1150 erfolgt ein Anordnen eines elektronischen Bildstabilisators zur Bildstabilisierung eines ersten optischen Kanals des Arrays entlang der ersten und der zweiten Bildachse.

Hierin beschriebene Ausführungsbeispiele ermöglichen Multiaperturabbildungssysteme mit linearer Kanalanordnung, d.h. einzeilig oder mehrzeilig entlang einer Zeilenerstreckungsrichtung, mit optischer Bildstabilisierung unter Nutzung einachsiger translativer Bewegung zwischen Bildsensor und Abbildungsoptik sowie einachsiger rotativer Bewegung eines strahlumlenkenden Spiegelarrays.

Obwohl vorangehend beschriebene Ausführungsbeispiele so beschrieben sind, dass eine Anzahl von vier optischen Kanälen oder ein Vielfaches hiervon angeordnet sind, können Multiaperturabbildungsvorrichtungen gemäß weiterer Ausführungsbeispiele eine beliebige Anzahl von optischen Kanälen umfassen, beispielsweise können zumindest zwei, zumindest drei, zumindest vier, zumindest zehn oder eine höhere Anzahl von optischen Kanälen angeordnet sein.

Obwohl vorangehend beschriebene Ausführungsbeispiele so beschrieben sind, dass der optische Bildstabilisator 22 den Aktor 36 und den Aktor 42 umfasst, können gemäß weiterer Ausführungsbeispielen die Aktoren 36 und 42 auch als gemeinsamer Aktor ausgebildet sein. Beispielsweise kann eine durch den Aktor erzeugte Bewegung mittels eines Kraft- und/oder Wegumsetzers (Getriebe) auf den Bildsensor 12, das optische Array 14 und/oder die Strahlumlenkeinrichtung 18 geführt werden, um eine jeweilige Bewegung zu erhalten. Alternativ oder zusätzlich können eine oder mehrere Komponenten auch durch mehrere Aktoren bewegt werden, wie es beispielsweise im Zusammenhang mit der Multiaperturabbildungsvorrichtung 40 beschrieben ist.

Der Bildsensor kann beispielsweise als komplementärer Metall-Oxid-Halbleiter (complementary metal-oxide-semiconductor - CMOS) oder einer hiervon verschiedenen Technologie ausgeführt sein. Die optischen Kanäle eines jeweiligen Arrays können so verstanden werden, dass diese einen Bereich definieren, in welchem ein Strahlengang, der auf einen jeweiligen Bildsensorbereich geführt wird, optisch verändert wird. Ein einem Bildsensorbereich zugeordneter Strahlengang kann somit durch den optischen Kanal des Arrays hindurchwandern.

Es wurde bereits weiter oben darauf hingewiesen, dass die Strahlengänge bzw. optischen Achsen ausgehend von der Strahlumlenkeinrichtung in voneinander verschiedene Richtungen gelenkt werden können. Dies kann erhalten werden, indem die Strahlengänge während einer Umlenkung an der Strahlumlenkeinrichtung und/oder durch die Optiken abweichend von einer Parallelität zueinander gelenkt werden. Die Strahlengänge bzw. optischen Achsen können von einer Parallelität vor bzw. ohne Strahlumlenkung abweichend sein. Dieser Umstand wird im Folgenden damit umschrieben, dass die Kanäle mit einer Art Vorab-Divergenz versehen sein können. Mit dieser Vorab-Divergenz der optischen Achsen wäre es möglich, dass sich beispielsweise nicht alle Facettenneigungen von Facetten der Strahlumlenkeinrichtung untereinander unterscheiden, sondern dass manche Gruppen von Kanälen beispielsweise die Facetten mit gleicher Neigung besitzen oder auf diese gelenkt werden. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch einen lateralen Versatz zwischen optischen Zentren der Optiken der optischen Kanäle und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. es sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden. Vereinfachend können die Optiken eine (Vorab-)Divergenz der Strahlengänge entlang einer ersten (Bild-)Richtung und die Strahlumlenkeinrichtung eine Divergenz der Strahlengänge entlang einer zweiten (Bild-)Richtung ermöglichen.

Die erwähnte möglicherweise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angeordnet sind, wie z.B.

an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angeordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein reiner In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht. So können bspw. jeweils benachbarte optische Kanäle in der gemeinsamen Ebene verlaufende, jeweils gegeneinander schielende, also mit einer Vorab-Divergenz versehene, optische Achsen aufweisen. Eine Facette kann bezüglich einer Gruppe von optischen Kanälen angeordnet, lediglich in einer Richtung geneigt und parallel zur Zeilenerstreckungsrichtung sein.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecke, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken.

Obige Ausführungsbeispiele lassen sich also in Form einer Multiaperturabbildungsvorrichtung und/oder eines eine derartige Multiaperturabbildungsvorrichtung umfassenden Abbildungssystems implementieren, und zwar mit einzeiliger Kanalanordnung, wobei jeder Kanal ein Teilgesichtsfeld eines Gesamtgesichtsfeld überträgt und sich die Teilgesichtsfelder teilweise überlappen. Ein Aufbau mit mehreren solcher Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Multiaperturabbildungsvorrichtung (10; 10'; 20; 30; 40) mit:

   einem Bildsensor (12);
   einem Array (14) von optischen Kanälen (16a-h), wobei jeder optische Kanal (16a-h) eine Optik (17) zur Abbildung eines Teilgesichtsfeldes (72a-d) eines Gesamtgesichtsfeldes (70) auf einen Bildsensorbereich (24a-h) des Bildsensors (12) umfasst;
   einer Strahlumlenkeinrichtung (18) zum Umlenken eines Strahlengangs (26a-h) der optischen Kanäle (16a-h); und
   einem optischen Bildstabilisator (22) zur Bildstabilisierung entlang einer ersten Bildachse (28) durch Erzeugen einer ersten Relativbewegung (34; 39a) zwischen dem Bildsensor (12), dem Array (14) und der Strahlumlenkeinrichtung (18) und zur Bildstabilisierung entlang einer zweiten Bildachse (32) durch Erzeugen einer zweiten Relativbewegung (38; 39b) zwischen dem Bildsensor (12), dem Array (14) und der Strahlumlenkeinrichtung (18);
   einem elektronischen Bildstabilisator (41) zur Bildstabilisierung eines ersten optischen Kanals (16a-h) des Arrays (14) entlang der ersten und der zweiten Bildachse (28, 32);
   wobei der optische Bildstabilisator (22) ausgebildet ist, um die optische Bildstabilisierung so auszuführen, dass die optische Bildstabilisierung für ein Abbild eines ersten der Teilgesichtsfelder (72a-d) als Referenzabbild möglichst exakt ist, wobei der elektronische Bildstabilisator (41) ausgebildet ist, um ein Abbild eines zweiten Teilgesichtsfeldes (72a-d) ausgehend von dem Referenzabbild des optischen Bildstabilisators auszuführen.

2. Multiaperturabbildungsvorrichtung gemäß Anspruch 1, bei der der elektronische Bildstabilisator (41) ausgebildet ist, um den ersten optischen Kanal (16a-h) und den zweiten optischen Kanal (16a-h) bezogen auf einen Referenzkanal der optischen Kanäle und/oder durch eine kanalindividuelle Bildauswertung der Bewegung von Bilddetails kanalindividuell und von einander verschieden entlang der ersten und der zweiten Bildachse (28, 32) zu stabilisieren .

3. Multiaperturabbildungsvorrichtung gemäß Anspruch 1 oder 2, bei der der elektronische Bildstabilisator (41) ausgebildet ist, um die kanalindividuelle elektronische Bildstabilisierung in jedem Kanal nach einem festgelegten funktionellen Zusammenhang auszuführen, der den kanalindividuellen Abbildungsfehler als Funktion einer jeweiligen Brennweite der Optik des optischen Kanals und von den Relativbewegungen zwischen dem Bildsensor (12), dem Array (14) und der Strahlumlenkeinrichtung (18) beschreibt;
wobei der funktionelle Zusammenhang eine lineare Funktion ist.

4. Multiaperturabbildungsvorrichtung gemäß einem der vorangehenden Ansprüche, ,bei der der elektronische Bildstabilisator (41) ausgebildet ist, um die kanalindividuelle elektronische Bildstabilisierung in jedem Kanal nach einem festgelegten funktionellen Zusammenhang auszuführen, der den kanalindividuellen Abbildungsfehler als Funktion einer jeweiligen Brennweite der Optik des optischen Kanals und von den Relativbewegungen zwischen dem Bildsensor (12), dem Array (14) und der Strahlumlenkeinrichtung (18) beschreibt; und bei der der optische Bildstabilisator (22) ausgebildet ist, um die optische Bildstabilisierung entlang einer der Bildrichtungen basierend auf einer Rotationsbewegung der Strahlumlenkeinrichtung bereitzustellen, wobei der funktionelle Zusammenhang eine Winkelfunktion ist, die einen Rotationswinkel der Rotationsbewegung der Strahlumlenkeinrichtung (18) auf einen Umfang der elektronischen Bildstabilisierung entlang der Bildrichtung abbildet.

5. Multiaperturabbildungsvorrichtung gemäß einem der vorangehenden Ansprüche, bei der sich Brennweiten von Optiken (64a-d) unterschiedlicher optischer Kanäle (16a-h) unterscheiden und eine Bewegung der Strahlumlenkeinrichtung (18) zu einer voneinander verschiedenen Änderung der Abbildungen auf die Bildsensorbereiche (24a-h) führt, wobei der elektronische Bildstabilisator (41) ausgebildet ist, um durch eine, eine kanalindividuelle Bildauswertung der Bewegung von Bilddetails umfassende kanalindividuelle und von einander verschiedene Bildstabilisierung Unterschiede zwischen den unterschiedlichen Änderungen der Abbildungen zu kompensieren.

6. Multiaperturabbildungsvorrichtung gemäß einem der vorangehenden Ansprüche, bei der sich Brennweiten von Optiken (64a-d) unterschiedlicher optischer Kanäle (16a-h) unterscheiden und eine Bewegung der Strahlumlenkeinrichtung (18) zu einer voneinander verschiedenen Änderung der Abbildungen auf die Bildsensorbereiche (24a-h) führt, wobei der elektronische Bildstabilisator (41) ausgebildet ist, um durch eine kanalindividuelle und von einander verschieden Bildstabilisierung Unterschiede zwischen den unterschiedlichen Änderungen der Abbildungen zu kompensieren.

7. Multiaperturabbildungsvorrichtung gemäß einem der vorangehenden Ansprüche, bei der eine erste, einem ersten optischen Kanal (16a) zugeordnete Optik (64a) und eine zweite, einem zweiten optischen Kanal (16b) zugeordnete Optik (64b) innerhalb eines Toleranzbereichs von höchstens 10 % gleich gebildet sind.

8. Multiaperturabbildungsvorrichtung gemäß einem der vorangehenden Ansprüche, bei der die erste Relativbewegung (34; 39a) zumindest eines aus einer translatorischen Relativbewegung (34) zwischen dem Bildsensor (12) und dem Array (14), einer translatorischen Relativbewegung (39a) zwischen dem Bildsensor (12) und der Strahlumlenkeinrichtung (18) und einer translatorischen Relativbewegung (39a) zwischen dem Array (14) und der Strahlumlenkeinrichtung (18) umfasst, und bei der die zweite Relativbewegung (38; 39b) zumindest eines aus einer Rotationsbewegung (38) der Strahlumlenkeinrichtung (18), einer translatorischen Relativbewegung zwischen dem Bildsensor (12) und dem Array (14) und einer translatorischen Relativbewegung (39b) zwischen dem Array (14) und der Strahlumlenkeinrichtung (18) umfasst.

9. Multiaperturabbildungsvorrichtung gemäß einem der vorangehenden Ansprüche, bei der der optische Bildstabilisator (22) zumindest einen Aktor (36, 37, 42) umfasst und so angeordnet ist, dass er zumindest teilweise zwischen zwei Ebenen (52a, 52b) angeordnet ist, die durch Seiten eines Quaders (55) aufgespannt werden, wobei die Seiten des Quaders zueinander sowie zu einer Zeilenerstreckungsrichtung (35, 65, z) des Arrays (14) und eines Teils des Strahlengangs der optischen Kanäle (16a-h) zwischen dem Bildsensor (12) und den Optiken (64a-h) parallel ausgerichtet sind und dessen Volumen minimal ist und dennoch den Bildsensor (12) und das Array (14) umfasst.

10. Multiaperturabbildungsvorrichtung gemäß einem der vorangehenden Ansprüche, bei der die Strahlumlenkeinrichtung (18) eine erste Hauptseite (174a) und eine zweite Hauptseite (174b) aufweist und ausgebildet ist, um in einem ersten Betriebszustand Strahlengänge der optischen Kanäle (64a-h) mit der ersten Hauptseite (174a) in eine erste Blickrichtung der Multiaperturabbildungsvorrichtung zu lenken, und um in einem zweiten Betriebszustand die Strahlengänge der optischen Kanäle (64a-h) mit der zweiten Hauptseite (174b) in eine zweite Blickrichtung der Multiaperturabbildungsvorrichtung zu lenken.

11. Multiaperturabbildungsvorrichtung gemäß einem der vorangehenden Ansprüche, die ausgebildet ist, um ein Sensorsignal von einem Sensor zu empfangen, und um das Sensorsignal bezüglich einer Information, die mit einer Relativbewegung zwischen der Multiaperturabbildungsvorrichtung und dem Objekt korreliert ist, auszuwerten, und um eine Ansteuerung des optischen oder elektronischen Bildstabilisators (22; 41) unter Verwendung der Information auszuführen.

12. Multiaperturabbildungsvorrichtung (10; 10'; 20; 30; 40) mit:

einem Bildsensor (12);
einem Array (14) von optischen Kanälen (16a-h), wobei jeder optische Kanal (16a-h) eine Optik (17) zur Abbildung eines Teilgesichtsfeldes (72a-d) eines Gesamtgesichtsfeldes (70) auf einen Bildsensorbereich (24a-h) des Bildsensors (12) umfasst;
einer Strahlumlenkeinrichtung (18) zum Umlenken eines Strahlengangs (26a-h) der optischen Kanäle (16a-h); und
einem optischen Bildstabilisator (22) zur Bildstabilisierung entlang einer ersten Bildachse (28) durch Erzeugen einer ersten Relativbewegung (34; 39a) zwischen dem Bildsensor (12), dem Array (14) und der Strahlumlenkeinrichtung (18) und zur Bildstabilisierung entlang einer zweiten Bildachse (32) durch Erzeugen einer zweiten Relativbewegung (38; 39b) zwischen dem Bildsensor (12), dem Array (14) und der Strahlumlenkeinrichtung (18);
einem elektronischen Bildstabilisator (41) zur Bildstabilisierung eines ersten optischen Kanals (16a-h) des Arrays (14) entlang der ersten und der zweiten Bildachse (28, 32);
wobei der optische Bildstabilisator (22) ausgebildet ist, um ein Abbild des abgebildeten Teilgesichtsfeldes (72a-d) eines Referenzkanals der optischen Kanäle (16a-d) zu stabilisieren, und bei der der elektronische Bildstabilisator (41) ausgebildet ist, um eine Bildstabilisierung kanalindividuell und von einander verschieden für von dem Referenzkanal verschiedene optische Kanäle (16a-h) auszuführen, wobei die Multiaperturabbildungsvorrichtung ausgebildet ist, um den Referenzkanal ausschließlich optisch zu stabilisieren.

13. Abbildungssystem (60; 80) mit einer ersten und einer zweiten Multiaperturabbildungsvorrichtung (10; 10'; 20; 30; 40) gemäß einem der vorangehenden Ansprüche, die ausgebildet ist, um ein Gesamtgesichtsfeld (70) zumindest teilweise stereoskop zu erfassen.

14. Verfahren (1100) zum Bereitstellen einer Multiaperturabbildungsvorrichtung (10; 10'; 20; 30; 40) mit folgenden Schritten:

Bereitstellen (1110) eines Bildsensors;
Bereitstellen (1120) eines Arrays von optischen Kanälen, so dass jeder optische Kanal eine Optik zur Abbildung eines Teilgesichtsfeldes eines Gesamtgesichtsfeldes auf einen Bildsensorbereich des Bildsensors umfasst;
Anordnen (1130) einer Strahlumlenkeinrichtung zum Umlenken eines Strahlengangs der optischen Kanäle; und
Anordnen (1140) eines optischen Bildstabilisators zur Bildstabilisierung entlang einer ersten Bildachse durch Erzeugen einer ersten Relativbewegung zwischen dem Bildsensor, dem Array und der Strahlumlenkeinrichtung und zur Bildstabilisierung entlang einer zweiten Bildachse durch Erzeugen einer zweiten Relativbewegung zwischen dem Bildsensor, dem Array und der Strahlumlenkeinrichtung;
Anordnen (1150) eines elektronischen Bildstabilisators zur Bildstabilisierung eines ersten optischen Kanals des Arrays entlang der ersten und der zweiten Bildachse;
so dass der optische Bildstabilisator (22) ausgebildet ist, um die optische Bildstabilisierung so auszuführen, dass die optische Bildstabilisierung für ein Abbild eines ersten der Teilgesichtsfelder (72a-d) als Referenzabbild möglichst exakt ist, wobei der elektronische Bildstabilisator (41) ausgebildet ist, um ein Abbild eines zweiten Teilgesichtsfeldes (72a-d) ausgehend von dem Referenzabbild des optischen Bildstabilisators auszuführen.

15. Verfahren (1100) zum Bereitstellen einer Multiaperturabbildungsvorrichtung (10; 10'; 20; 30; 40) mit folgenden Schritten:

Bereitstellen (1110) eines Bildsensors;
Bereitstellen (1120) eines Arrays von optischen Kanälen, so dass jeder optische Kanal eine Optik zur Abbildung eines Teilgesichtsfeldes eines Gesamtgesichtsfeldes auf einen Bildsensorbereich des Bildsensors umfasst;
Anordnen (1130) einer Strahlumlenkeinrichtung zum Umlenken eines Strahlengangs der optischen Kanäle; und
Anordnen (1140) eines optischen Bildstabilisators zur Bildstabilisierung entlang einer ersten Bildachse durch Erzeugen einer ersten Relativbewegung zwischen dem Bildsensor, dem Array und der Strahlumlenkeinrichtung und zur Bildstabilisierung entlang einer zweiten Bildachse durch Erzeugen einer zweiten Relativbewegung zwischen dem Bildsensor, dem Array und der Strahlumlenkeinrichtung;
Anordnen (1150) eines elektronischen Bildstabilisators zur Bildstabilisierung eines ersten optischen Kanals des Arrays entlang der ersten und der zweiten Bildachse;
so dass der optische Bildstabilisator (22) ausgebildet ist, um ein Abbild des abgebildeten Teilgesichtsfeldes (72a-d) eines Referenzkanals der optischen Kanäle (16a-d) zu stabilisieren, und bei der der elektronische Bildstabilisator (41) ausgebildet ist, um eine Bildstabilisierung kanalindividuell und von einander verschieden für von dem Referenzkanal verschiedene optische Kanäle (16a-h) auszuführen, wobei die Multiaperturabbildungsvorrichtung ausgebildet ist, um den Referenzkanal ausschließlich optisch zu stabilisieren.

**Claims**

1. Multi-aperture imaging device (10; 10'; 20; 30; 40) comprising:

   an image sensor (12);
   an array (14) of optical channels (16a-h), each optical channel (16a-h) including an optic (17) for projecting a partial field of view (72a-d) of a total field of view (70) on an image sensor area (24a-h) of the image sensor (12);
   a beam-deflecting means (18) for deflecting an optical path (26a-h) of the optical channels (16a-h); and
   an optical image stabilizer (22) for the image stabilization along a first image axis (28) by generating a first relative movement (34; 39a) between the image sensor (12), the array (14) and the beam-deflecting means (18) and for the image stabilization along a second image axis (32) by generating a second relative movement (38; 39b) between the image sensor (12), the array (14) and the beam-deflecting means (18);
   an electronic image stabilizer (41) for the image stabilization along a first optical channel (16a-h) of the array (14) along the first and the second image axis (28, 32);
   wherein the optical image stabilizer (22) is configured to execute the optical image stabilization such that the optical image stabilization for an image of a first of the partial fields of view (72a-d) as reference image is as exact as possible, wherein the electronic image stabilizer (41) is configured to execute an image of a second partial field of view (72a-d) based on the reference image of the optical image stabilizer.

2. Multi-aperture imaging device according to claim 1, wherein the electronic image stabilizer (41) is configured to stabilize the first optical channel (16a-h) and the second optical channel (16a-h) relative to a reference channel of the optical channels and/or by means of channel-individual image evaluation of the movement of image details in a channel-individual manner and differently from each other along the first and the second image axis (28, 32).

3. Multi-aperture imaging device according to claim 1 or 2, wherein the electronic image stabilizer (41) is configured to execute the channel-individual electronic image stabilization in each channel according to a determined functional connection that describes the channel-individual imaging error as a function of a respective focal length of optics of the optical channel and of the relative movements between the image sensor (12), the array (14) and the beam-deflecting means (18); wherein the functional connection is a linear function.

4. Multi-aperture imaging device according to any of the preceding claims, wherein the electronic image stabilizer (41) is configured to execute the channel-individual electronic image stabilization in each channel according to a determined functional connection that describes the channel-individual imaging error as a function of a respective focal length of optics of the optical channel and of the relative movements between the image sensor (12), the array (14) and the beam-deflecting means (18); and wherein the optical image stabilizer (22) is configured to provide the optical image stabilization along one of the image directions based on a rotational movement of the beam-deflecting means, wherein the functional connection is an angle function that projects a rotation angle of the rotational movement of the beam-deflecting means (18) on an extent of the electronic image stabilization along the image direction.

5. Multi-aperture imaging device according to any one of the preceding claims, wherein the focal lengths of optics (64a-d) of different optical channels (16a-h) differ and a movement of beam-deflecting means (18) leads to differing changes of the projections on the image sensor areas (24a-h), wherein the electronic image stabilizer (41) is configured to compensate differences between the different changes of the projections by means of a channel-individual and differing image stabilization including a channel-individual image evaluation of the movement of image details.

6. Multi-aperture imaging device according to any one of the preceding claims, wherein the focal lengths of optics (64a-d) of different optical channels (16a-h) differ, and a movement of the beam-deflecting means (18) leads to differing changes of the projections on the image sensor areas (24a-h), wherein the electronic image stabilizer (41) is configured to compensate differences between the different changes of the projections by means of a channel-individual and differing image stabilization.

7. Multi-aperture imaging device according to any one of the preceding claims, wherein a first optic (64a) that is associated with a first optical channel (16a) and a second optic (64b) that is associated with a second optical channel (16b) are formed in the same manner in a tolerance range of not more than 10%.

8. Multi-aperture imaging device according to any one of the preceding claims, wherein the first relative movement (34; 39a) includes at least one of a translational relative movement (34) between the image sensor (12) and the array (14), a translational relative movement (39a) between the image sensor (12) and the beam-deflecting means (18) and a translational relative movement (39a) between the array (14) and the beam-deflecting means (18), and wherein the second relative movement (38; 39b) includes at least one of a rotational movement (38) of the beam-deflecting means (18), a translational relative movement between the image sensor (12) and the array (14) and a translational relative movement (39b) between the array (14) and the beam-deflecting means (18).

9. Multi-aperture imaging device according to any one of the preceding claims, wherein the optical image stabilizer (22) includes at least one actuator (36, 37, 42) and is arranged such that it is at least partially arranged between two planes (52a, 52b) that are spanned by sides of a cuboid (55), wherein the sides of the cuboid are orientated in parallel to each other and to a line extension direction (35, 65, z) of the array (14) and a part of the optical path of the optical channels (16a-h) between the image sensor (12) and the optics (64a-h), and the same has a minimal volume but still includes the image sensors (12) and the array (14).

10. Multi-aperture imaging device according to any one of the preceding claims, wherein the beam-deflecting means (18) comprises a first main side (174a) and a second main side (174b) and is configured to, in a first operational state, direct optical paths of the optical channels (64a-h) in a first view direction of the multi-aperture imaging device with the first main side (174a), and, in a second operational state, direct optical paths of the optical channels (64a-h) in a second view direction of the multi-aperture imaging device with the second main side (174b).

11. Multi-aperture imaging device according to any one of the preceding claims, configured to receive a sensor signal from a sensor, and to evaluate the sensor signal with respect to an information that correlates to a relative movement between the multi-aperture imaging device and the object, and to execute a control of the optical or electronic image stabilizer (22; 41) using the information.

12. Multi-aperture imaging device (10; 10'; 20; 30; 40) comprising:

an image sensor (12);
an array (14) of optical channels (16a-h), each optical channel (16a-h) including an optic (17) for projecting a partial field of view (72a-d) of a total field of view (70) on an image sensor area (24a-h) of the image sensor (12);
a beam-deflecting means (18) for deflecting an optical path (26a-h) of the optical channels (16a-h); and
an optical image stabilizer (22) for the image stabilization along a first image axis (28) by generating a first relative movement (34; 39a) between the image sensor (12), the array (14) and the beam-deflecting means (18) and for the image stabilization along a second image axis (32) by generating a second relative movement (38; 39b) between the image sensor (12), the array (14) and the beam-deflecting means (18);
an electronic image stabilizer (41) for the image stabilization along a first optical channel (16a-h) of the array (14) along the first and the second image axis (28, 32);
wherein the optical image stabilizer (22) is configured to stabilize an image of the imaged partial field of view (72a-d) of a reference channel of the optical channels (16a-d), and wherein the electronic image stabilizer (41) is configured to execute an image stabilization in a channel-individual manner and differently from each other for optical channels (16a-h) that differ from the reference channel, wherein the multi-aperture imaging device is configured to stabilize the reference channel exclusively in an optical manner.

13. Imaging system (60; 80) having a first and a second multi-aperture imaging device (10; 10'; 20; 30; 40) according to any one of the preceding claims, configured to capture a total field of view (70) at least partially in a stereoscopic manner.

14. Method (1100) of providing a multi-aperture imaging device (10; 10'; 20; 30; 40), comprising:

providing (1110) an image sensor;
providing (1120) an array of optical channels such that each optical channel includes an optic for projecting a partial field of view of a total field of view on an image sensor area of the image sensor;
arranging (1130) a beam-deflecting means for deflecting an optical path of the optical channels; and
arranging (1140) an optical image stabilizer for the image stabilization along a first image axis by generating a first relative movement between the image sensor, the array and the beam-deflecting means and for the image stabilization along a second image axis by generating a second relative movement between the image sensor, the array and the beam-deflecting means; arranging (1150) an electronic image stabilizer for the image stabilization of a first optical channel of the array along the first and the second image axis;

wherein the optical image stabilizer (22) is configured to execute the optical image stabilization such that the optical image stabilization for an image of a first of the partial fields of view (72a-d) as reference image is as exact as possible, wherein the electronic image stabilizer (41) is configured to execute an image of a second partial field of view (72a-d) based on the reference image of the optical image stabilizer.

15. Method (1100) of providing a multi-aperture imaging device (10; 10'; 20; 30; 40), comprising:

providing (1110) an image sensor;
providing (1120) an array of optical channels such that each optical channel includes an optic for projecting a partial field of view of a total field of view on an image sensor area of the image sensor;
arranging (1130) a beam-deflecting means for deflecting an optical path of the optical channels; and
arranging (1140) an optical image stabilizer for the image stabilization along a first image axis by generating a first relative movement between the image sensor, the array and the beam-deflecting means and for the image stabilization along a second image axis by generating a second relative movement between the image sensor, the array and the beam-deflecting means; arranging (1150) an electronic image stabilizer for the image stabilization of a first optical channel of the array along the first and the second image axis;

wherein the optical image stabilizer (22) is configured to stabilize an image of the imaged partial field of view (72a-d) of a reference channel of the optical channels (16a-d), and wherein the electronic image stabilizer (41) is configured to execute an image stabilization in a channel-individual manner and differently from each other for optical channels (16a-h) that differ from the reference channel, wherein the multi-aperture imaging device is configured to stabilize the reference channel exclusively in an optical manner.

**Revendications**

1. Dispositif d'imagerie à ouvertures multiples (10; 10'; 20; 30; 40) avec:

un capteur d'image (12);
un réseau (14) de canaux optiques (16a à h), où chaque canal optique (16a à h) comporte une optique (17) destinée à reproduire un champ de vision partiel (72a à d) d'un champ de vision d'ensemble (70) sur un zone de capteur d'image (24a à h) du capteur d'image (12);
un moyen de déviation de faisceau (18) destiné à dévier un trajet de faisceau (26a à h) des canaux optiques (16a à h); et
un stabilisateur d'image optique (22) destiné à la stabilisation d'image le long d'un premier axe d'image (28) en générant un premier mouvement relatif (34; 39a) entre le capteur d'image (12), le réseau (14) et le moyen de déviation de faisceau (18), et à la stabilisation d'image le long d'un deuxième axe d'image (32) en générant un deuxième mouvement relatif (38; 39b) entre le capteur d'image (12), le réseau (14) et le moyen de déviation de faisceau (18);
un stabilisateur d'image électronique (41) destiné à la stabilisation d'image d'un premier canal optique (16a à h) du réseau (14) le long du premier et du deuxième axe d'image (28, 32);
dans lequel le stabilisateur d'image optique (22) est conçu pour effectuer la stabilisation d'image optique de sorte que la stabilisation d'image optique pour une reproduction d'un premier des champs de vision partiels (72a à d) comme image de référence soit aussi exacte que possible, dans lequel le stabilisateur d'image électronique (41) est conçu pour effectuer une reproduction d'un deuxième champ de vision partiel (72a à d) en partant de la reproduction de référence du stabilisateur d'image optique.

2. Dispositif d'imagerie à ouvertures multiples selon la revendication 1, dans lequel le stabilisateur d'image électronique (41) est conçu pour stabiliser le premier canal optique (16a à h) et le deuxième canal optique (16a à h) par rapport à un canal de référence des canaux optiques et/ou par une évaluation d'image individuelle par canal du mouvement des détails d'image de manière individuelle par canal et différente l'une de l'autre le long du premier et du deuxième axe d'image (28, 32).

3. Dispositif d'imagerie à ouvertures multiples selon la revendication 1 ou 2, dans lequel le stabilisateur d'image électronique (41) est conçu pour effectuer la stabilisation d'image électronique individuelle par canal dans chaque canal selon un rapport fonctionnel fixé qui décrit l'erreur de reproduction individuelle par canal comme étant fonction d'une distance focale respective de l'optique du canal optique et des mouvements relatifs entre le capteur d'image (12), le réseau (14) et le moyen de déviation de faisceau (18);

dans lequel le rapport fonctionnel est une fonction linéaire.

4. Dispositif d'imagerie à ouvertures multiples selon l'une des revendications précédentes, dans lequel le stabilisateur d'image électronique (41) est conçu pour effectuer la stabilisation d'image électronique individuelle par canal dans chaque canal selon un rapport fonctionnel fixé qui décrit l'erreur de reproduction individuelle par canal comme étant fonction d'une distance focale respective de l'optique du canal optique et des mouvements relatifs entre le capteur d'image (12), le réseau (14) et le moyen de déviation de faisceau (18); et dans lequel le stabilisateur d'image optique (22) est conçu pour fournir la stabilisation d'image optique dans l'une des directions d'image sur base d'un mouvement de rotation du moyen de déviation de faisceau, dans lequel le rapport fonctionnel est une fonction angulaire qui reproduit un angle de rotation du mouvement de rotation du moyen de déviation de faisceau (18) sur un pourtour de la stabilisation d'image électronique dans la direction d'image.

5. Dispositif d'imagerie à ouvertures multiples selon l'une des revendications précédentes, dans lequel les longueurs focales des optiques (64a à d) de différents canaux optiques (16a à h) diffèrent l'une de l'autre et un mouvement du moyen de déviation de faisceau (18) conduit à une modification des reproductions différente l'une de l'autre sur les zones de capteur d'image (24a à h), dans lequel le stabilisateur d'image électronique (41) est conçu pour compenser, par une stabilisation d'image individuelle par canal comportant une évaluation d'image individuelle par canal du mouvement des détails d'image et différente l'une de l'autre, les différences entre les différentes modifications des reproductions.

6. Dispositif d'imagerie à ouvertures multiples selon l'une des revendications précédentes, dans lequel les distances focales des optiques (64a à d) de différents canaux optiques (16a à h) diffèrent l'une de l'autre et un mouvement du moyen de déviation de faisceau (18) conduit à une modification différente des reproductions sur les zones de capteur d'image (24a à h), dans lequel le stabilisateur d'image électronique (41) est conçu pour compenser, par une stabilisation d'image individuelle par canal et différente l'une de l'autre, les différences entre les différentes modifications des reproductions.

7. Dispositif d'imagerie à ouvertures multiples selon l'une des revendications précédentes, dans lequel une première optique (64a) associée à un premier canal optique (16a) et une deuxième optique (64b) associée à un deuxième canal optique (16b) sont formées de manière identique dans les limites d'une plage de tolérance de tout au plus 10%.

8. Dispositif d'imagerie à ouvertures multiples selon l'une des revendications précédentes, dans lequel le premier mouvement relatif (34; 39a) comporte au moins l'un parmi un mouvement de translation relatif (34) entre le capteur d'image (12) et le réseau (14), un mouvement de translation relatif (39a) entre le capteur d'image (12) et le moyen de déviation de faisceau (18) et un mouvement de translation relatif (39a) entre le réseau (14) et le moyen de déviation de faisceau (18), et dans lequel le deuxième mouvement relatif (38; 39b) comporte au moins l'un parmi un mouvement de rotation (38) du moyen de déviation de faisceau (18), un mouvement de translation relatif entre le capteur d'image (12) et le réseau (14) et un mouvement de translation relatif (39b) entre le réseau (14) et le moyen de déviation de faisceau (18).

9. Dispositif d'imagerie à ouvertures multiples selon l'une des revendications précédentes, dans lequel le stabilisateur optique d'image (22) comporte au moins un actionneur (36, 37, 42) et est disposé de sorte qu'il soit disposé au moins partiellement entre deux plans (52a, 52b) qui sont définis par les côtés d'un parallélépipède (55), dans lequel les côtés du parallélépipède sont orientés de manière parallèle l'un à l'autre ainsi qu'à une direction d'extension de rangées (35, 65, z) du réseau (14) et d'une partie du trajet de faisceau des canaux optiques (16a à h) entre le capteur d'image (12) et les optiques (64a à h) et dont le volume est minimum et comporte néanmoins le capteur d'image (12) et le réseau (14).

10. Dispositif d'imagerie à ouvertures multiples selon l'une des revendications précédentes, dans lequel le moyen de déviation de faisceau (18) présente une première face principale (174a) et une deuxième face principale (174b) et est conçu pour diriger, dans un premier état de fonctionnement, les trajets de faisceau des canaux optiques (64a à h) avec la première face principale (174a) dans une première direction de vision du dispositif d'imagerie à ouvertures multiples, et pour diriger, dans un deuxième état de fonctionnement, les trajets optiques des canaux optiques (64a à h) avec la deuxième face principale (174b) dans une deuxième direction de vision du dispositif d'imagerie à ouvertures multiples.

11. Dispositif d'imagerie à ouvertures multiples selon l'une des revendications précédentes, qui est conçu pour recevoir un signal de capteur d'un capteur et pour évaluer le signal de capteur en ce qui concerne une information qui est corrélée avec un mouvement relatif entre le dispositif d'imagerie à ouvertures multiples et l'objet, et pour effectuer une commande du stabilisateur d'image optique ou électronique (22; 41) à l'aide de l'information.

12. Dispositif d'imagerie à ouvertures multiples (10; 10'; 20; 30; 40) avec:

   un capteur d'image (12);
   un réseau (14) de canaux optiques (16a à h), où chaque canal optique (16a à h) comporte une optique (17) destinée à reproduire un champ de vision partiel (72a à d) d'un champ de vision d'ensemble (70) sur un zone de capteur d'image (24a à h) du capteur d'image (12);
   un moyen de déviation de faisceau (18) destiné à dévier un trajet de faisceau (26a à h) des canaux optiques (16a à h); et
   un stabilisateur d'image optique (22) destiné à la stabilisation d'image le long d'un premier axe d'image (28) en générant un premier mouvement relatif (34; 39a) entre le capteur d'image (12), le réseau (14) et le moyen de déviation de faisceau (18) et à la stabilisation d'image le long d'un deuxième axe d'image (32) en générant un deuxième mouvement relatif (38; 39b) entre le capteur d'image (12), le réseau (14) et le moyen de déviation de faisceau (18);
   un stabilisateur d'image électronique (41) destiné à la stabilisation d'image d'un premier canal optique (16a à h) du réseau (14) le long du premier et du deuxième axe d'image (28, 32);
   dans lequel le stabilisateur d'image optique (22) est conçu pour stabiliser une reproduction du champ visuel partiel (72a à d) reproduit d'un canal de référence des canaux optiques (16a à d), et dans lequel le stabilisateur d'image électronique (41) est conçu pour effectuer une stabilisation d'image individuelle par canal et différente l'une de l'autre pour les canaux optiques (16a à h) différents du canal de référence, dans lequel le dispositif d'imagerie à ouvertures multiples est conçu pour stabiliser le canal de référence exclusivement de manière optique.

13. Système d'imagerie (60; 80) avec un premier et un deuxième dispositif d'imagerie à ouvertures multiples (10; 10'; 20; 30; 40) selon l'une des revendications précédentes, qui est conçu pour capturer un champ de vision d'ensemble (70) au moins partiellement de manière stéréoscope.

14. Procédé (1100) pour créer un dispositif d'imagerie à ouvertures multiples (10; 10'; 20; 30; 40), aux étapes suivantes consistant à:

prévoir (1110) un capteur d'image;
prévoir (1120) un réseau de canaux optiques, de sorte que chaque canal optique comporte une optique destinée à la reproduction d'un champ de vision partiel d'un champ de vision d'ensemble sur une zone de capteur d'image du capteur d'image;
disposer (1130) un moyen de déviation de faisceau destiné à dévier un trajet de faisceau des canaux optiques; et
disposer (1140) un stabilisateur d'image optique destiné à la stabilisation d'image le long d'un premier axe d'image en générant un premier mouvement relatif entre le capteur d'image, le réseau et le dispositif de déviation de faisceau et à la stabilisation d'image le long d'un deuxième axe d'image en générant un deuxième mouvement relatif entre le capteur d'image, le réseau et le dispositif de déviation de faisceau;
disposer (1150) un stabilisateur d'image électronique destiné à la stabilisation d'image d'un premier canal optique du réseau le long du premier et du deuxième axe d'image;
de sorte que le stabilisateur d'image optique (22) soit conçu pour effectuer la stabilisation d'image optique de sorte que la stabilisation d'image optique pour une reproduction d'un premier des champs de vision partiels (72a à d) comme reproduction de référence soit aussi exacte que possible, où le stabilisateur d'image électronique (41) est conçu pour effectuer une reproduction d'un deuxième champ de vision partiel (72a à d) en partant de la reproduction de référence du stabilisateur d'image optique.

15. Procédé (1100) pour créer un dispositif d'imagerie à ouvertures multiples (10; 10'; 20; 30; 40), aux étapes suivantes consistant à:

prévoir (1110) un capteur d'image;
prévoir (1120) un réseau de canaux optiques, de sorte que chaque canal optique comporte une optique destinée à la reproduction d'un champ de vision partiel d'un champ de vision d'ensemble sur une zone de capteur d'image du capteur d'image;
disposer (1130) un moyen de déviation de faisceau destiné à dévier un trajet de faisceau des canaux optiques; et
disposer (1140) un stabilisateur d'image optique destiné à la stabilisation d'image le long d'un premier axe d'image en générant un premier mouvement relatif entre le capteur d'image, le réseau et le dispositif de déviation de faisceau et à la stabilisation d'image le long d'un deuxième axe d'image en générant un deuxième mouvement relatif entre le capteur d'image, le réseau et le dispositif de déviation de faisceau;

disposer (1150) un stabilisateur d'image électronique destiné à la stabilisation d'image d'un premier canal optique du réseau le long du premier et du deuxième axe d'image;
de sorte que le stabilisateur d'image optique (22) soit conçu pour stabiliser une reproduction du champ de vision partiel reproduit (72a à d) d'un canal de référence des canaux optiques (16a à d), et dans lequel le stabilisateur d'image électronique (41) est conçu pour effectuer une stabilisation d'image de manière individuelle par canal et différente l'une de l'autre pour les canaux optiques (16a à h) différents du canal de référence, dans lequel le dispositif d'imagerie à ouvertures multiples est conçu pour stabiliser le canal de référence exclusivement de manière optique.

Fig. 1a

Fig. 1b

Fig. 2a

EP 3 593 201 B1

Fig. 2b

Fig. 3

Fig. 4a

Fig. 4b

Fig. 4c

18

46a 46b 46c 46d 46e 46f 46g 46h 66

1 2 3 4 1' 2' 3' 4'

88

65

Fig. 5a

18

46a 46e 46b 46f 46c 46g 46d 46h

1 1' 2 2' 3 3' 4 4'

88'

65

Fig. 5b

Fig. 6a

Fig. 6b

190

14

12

16d

16c

16b

16a

18

172d

172c

172b

172a

z

y

x

Fig. 6c

Fig. 6d

Fig. 6e

Fig. 6f

Fig. 7

EP 3 593 201 B1

EP 3 593 201 B1

Fig. 8

Fig. 9

Fig. 10a

Fig. 10b

Fig. 10c

Fig. 10d

Fig. 10e

EP 3 593 201 B1

<u>1100</u>

```
┌─────────────────────────────────────────────┐
│                                             │
│        Bereitstellen eines Bildsensors      │ ～1110
│                                             │
└─────────────────────────────────────────────┘
                      │
                      ▼
┌─────────────────────────────────────────────┐
│  Bereitstellen eines Arrays von optischen Kanälen, so dass │
│  jeder optische Kanal eine Optik zur Abbildung eines        │ ～1120
│  Teilgesichtsfeldes eines Gesamtgesichtsfeldes auf einen    │
│  Bildsensorbereich des Bildsensors umfasst                  │
└─────────────────────────────────────────────┘
                      │
                      ▼
┌─────────────────────────────────────────────┐
│  Anordnen einer Strahlumlenkeinrichtung zum Umlenken │
│  eines Strahlengangs der optischen Kanäle            │ ～1130
└─────────────────────────────────────────────┘
                      │
                      ▼
┌─────────────────────────────────────────────┐
│  Anordnen eines optischen Bildstabilisators zur      │
│  Bildstabilisierung entlang einer ersten Bildachse durch │
│  Erzeugen einer ersten Relativbewegung zwischen dem  │
│  Bildsensor, dem Array und der Strahlumlenkeinrichtung │ ～1140
│  und zur Bildstabilisierung entlang einer zweiten Bildachse │
│  durch Erzeugen einer zweiten Relativbewegung zwischen dem │
│  Bildsensor, dem Array und der Strahlumlenkeinrichtung │
└─────────────────────────────────────────────┘
                      │
                      ▼
┌─────────────────────────────────────────────┐
│  Anordnen eines elektronischen Bildstabilisators zur │
│  Bildstabilisierung eines ersten optischen Kanals des Arrays │ ～1150
│  entlang der ersten und der zweiten Bildachse        │
└─────────────────────────────────────────────┘
```

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015215840 A1
- US 2016360111 A1
- US 9232138 B1
- US 2010328471 A1